# EUROPÄISCHE PATENTANMELDUNG

(11) **EP 4 501 533 A2**
(43) Veröffentlichungstag der Anmeldung: **05.02.2025**
(21) Anmeldenummer: 24191479.5
(22) Anmeldetag: 29.07.2024
(51) Int. Cl.: B23Q 1/01, B23Q 1/52, B23Q 1/54, B23Q 1/62

(54) **WERKZEUGMASCHINE, FERTIGUNGSANLAGE UND VERFAHREN ZUR BEARBEITUNG VON STANGENMATERIAL**

(30) Priorität: 01.08.2023 DE 102023120440
(71) Anmelder: CHIRON Group SE, 78532 Tuttlingen (DE)
(72) Erfinder: Gems, Daniel, 78607 Talheim (DE); Widinger, Tobias, 78315 Radolfzell (DE); Steppacher, Jan, 78579 Neuhausen ob Eck (DE)
(74) Vertreter: Witte, Weller & Partner Patentanwälte mbB

(57) **Zusammenfassung**

Eine Werkzeugmaschine weist ein Gestell und eine daran gelagerte Werkzeugspindel auf, die in drei translatorischen Achsen relativ zum Gestell linear verfahrbar ist, umfassend eine erste horizontale Achse, eine zweite horizontale Achse und eine vertikale Achse, wobei die Werkzeugspindel über einen Z-Schlitten an einem X-Schlitten entlang der vertikalen Achse vertikal verfahrbar gelagert ist, wobei der X-Schlitten an einem Y-Schlitten entlang der ersten horizontalen Achse horizontal verfahrbar gelagert ist, und wobei der Y-Schlitten am Gestell entlang der zweiten horizontalen Achse horizontal verfahrbar gelagert ist. Am Gestell sind eine primäre Werkstückhalteeinheit, die als Drehspindel gestaltet ist, und eine sekundäre Werkstückhalteeinheit gelagert, wobei die primäre Werkstückhalteeinheit und die sekundäre Werkstückhalteeinheit in zumindest einer horizontalen Orientierung einander zugewandt und koaxial zueinander orientiert sind. Die primäre Werkstückhalteeinheit ist relativ zum Gestell um eine primäre Schwenkachse verschwenkbar ist, die parallel zur zweiten horizontalen Achse orientiert ist. Die sekundäre Werkstückhalteeinheit ist relativ zum Gestell um eine sekundäre Schwenkachse verschwenkbar, die parallel zur zweiten horizontalen Achse orientiert ist. Eine Fertigungsanlage nutzt eine solche Werkzeugmaschine. Ein Verfahren zur Bearbeitung von Stangenmaterial nutzt eine solche Fertigungsanlage.

## Beschreibung

Die vorliegende Offenbarung bezieht sich auf eine Werkzeugmaschine, eine Fertigungsanlage sowie auf ein Verfahren zur Bearbeitung von Stangenmaterial. Die Werkzeugmaschine weist ein Gestell, eine am Gestell gelagerte Werkzeugspindel, eine am Gestell gelagerte primäre Werkstückhalteeinheit, die als Drehspindel gestaltet ist, und eine am Gestell gelagerte sekundäre Werkstückhalteeinheit auf, wobei die primäre Werkstückhalteeinheit und die sekundäre Werkstückhalteeinheit in zumindest einer horizontalen Orientierung einander zugewandt und koaxial zueinander orientiert sind. Die Werkzeugmaschine und die mit einer solchen Werkzeugmaschine versehene Fertigungsanlage sind insbesondere zur Bearbeitung von Stangenmaterial geeignet. Insbesondere ist die Werkzeugmaschine für eine Dreh-Fräsbearbeitung und gegebenenfalls sogar für eine Komplettbearbeitung geeignet.

Aus der DE 10 2010 019 762 A1 ist eine Werkzeugmaschine zum Drehen und Fräsen bekannt, die eine Werkzeugspindel, eine erste Werkstückspindel und eine zweite Werkstückspindel aufweist. Die Werkzeugspindel ist um eine horizontale Achse (B-Achse) schwenkbar. Die zweite Werkstückspindel ist Bestandteil eines Spindelstocks, der ebenso um eine hierzu parallele Horizontalachse (B-Achse) schwenkbar ist. Die erste Werkstückspindel ist nicht um eine dazu parallel horizontale Achse (B-Achse) schwenkbar. Die zweite Werkstückspindel kann für einen Werkstückwechsel genutzt werden. Eine Fräsbearbeitung in fünf Achsen kann durch die Schwenkbewegung der Werkzeugspindel realisiert werden.

Aus der EP 1 818 136 A1 ist eine Werkzeugmaschine mit einer Werkzeugspindel, einer ersten Werkstückspindel und einer zweiten Werkstückspindel bekannt. Die beiden Werkstückspindeln sind jeweils um eine Schwenkachse verschwenkbar, die zweite Werkstückspindel ist translatorisch verfahrbar. Damit können Werkstücke zwischen den beiden Werkstückspindeln übergeben werden. Ferner ist eine sogenannte Sechs-Seiten-Bearbeitung ermöglicht.

Stichworte wie Nachhaltigkeit und Ressourceneffizienz gewinnen stetig an Bedeutung. Vor diesem Hintergrund besteht ein Bedarf an kompakt gestalteten Werkzeugmaschinen, mit denen sich Werkstücke bestimmte Abmessungen effizient bearbeiten lassen. Mit anderen Worten wird angestrebt, Werkzeugmaschinen mit Blick auf den Arbeitsraum, die erforderlichen Verfahrwege und/oder die elektrische Anschlussleistung an bestimmte Werkstücke anzupassen. Damit kann vermieden werden, dass kompakte Werkstücke mit übermäßig großen Werkzeugmaschinen bearbeitet werden. Dies gilt beispielsweise für typische Werkstücke auf dem Gebiet der Feinmechanik, der Medizintechnik, der Schmuckindustrie und/oder der Uhrenindustrie. Andere Anwendungen sind denkbar. Wenn ein günstiges Verhältnis zwischen den Abmessungen der zu bearbeitenden Werkstücke und dem Arbeitsraum der Werkzeugmaschine gegeben ist, kann der Flächenverbrauch, der Energieverbrauch und der sonstige Ressourcenverbrauch durch die Werkzeugmaschine optimiert werden.

Vor diesem Hintergrund liegt der vorliegenden Offenbarung die Aufgabe zugrunde, eine Werkzeugmaschine und eine Fertigungsanlage mit einer Werkzeugmaschine anzugeben, die bei kompakter Gestaltung eine effiziente Bearbeitung erlauben. Insbesondere soll die Werkzeugmaschine für die Komplettbearbeitung von Werkstücken auf Basis von Stangenmaterial geeignet sein. In beispielhaften Ausgestaltungen handelt es sich bei den verwendeten Halbzeugen um Stangen mit Querschnitten mit einem Durchmesser und/oder Kantenmaß von kleiner 50 mm, kleiner 30 mm oder gar 26 mm oder weniger. Werkstücke, die auf Basis solcher Halbzeuge gefertigt werden, sollen sich mit der Werkzeugmaschine besonders effizient fertigen lassen. Vorzugsweise berücksichtigt das Konzept der Werkzeugmaschine die gewünschte kompakte Gestaltung. Insbesondere soll die Werkzeugmaschine ein günstiges Verhältnis aus bereitgestelltem Arbeitsraum sowie Flächenverbrauch/Raumverbrauch aufweisen. Ferner soll eine Fertigungsanlage mit einer solchen Werkzeugmaschine und einem an die Bauweise der Werkzeugmaschine angepassten Werkstückmagazin angegeben werden. Schließlich soll ein Verfahren zur Bearbeitung von Stangenmaterial angegeben werden, dass eine solche Fertigungsanlage nutzt.

Gemäß einem ersten Aspekt bezieht sich die vorliegende Offenbarung auf eine Werkzeugmaschine, die Folgendes aufweist:
- ein Gestell,
- eine am Gestell gelagerte Werkzeugspindel, die in drei translatorischen Achsen relativ zum Gestell linear verfahrbar ist, umfassend eine erste horizontale Achse, eine zweite horizontale Achse und eine vertikale Achse,
   wobei die Werkzeugspindel über einen Z-Schlitten an einem X-Schlitten entlang der vertikalen Achse vertikal verfahrbar gelagert ist, wobei der X-Schlitten an einem Y-Schlitten entlang der ersten horizontalen Achse horizontal verfahrbar gelagert ist, und wobei der Y-Schlitten am Gestell entlang der zweiten horizontalen Achse horizontal verfahrbar gelagert ist,
- eine am Gestell gelagerte primäre Werkstückhalteeinheit, die als Drehspindel gestaltet ist, und
- eine am Gestell gelagerte sekundäre Werkstückhalteeinheit,
   wobei die primäre Werkstückhalteeinheit und die sekundäre Werkstückhalteeinheit in zumindest einer horizontalen Orientierung einander zugewandt und koaxial zueinander orientiert sind,
   wobei die primäre Werkstückhalteeinheit relativ zum Gestell um eine primäre Schwenkachse verschwenkbar ist, die parallel zur zweiten horizontalen Achse orientiert ist, und
   wobei die sekundäre Werkstückhalteeinheit relativ zum Gestell um eine sekundäre Schwenkachse verschwenkbar ist, die parallel zur zweiten horizontalen Achse orientiert ist.

Die Aufgabe der Offenbarung wird auf diese Weise gelöst. Offenbarungsgemäß erlaubt nämlich die Verschwenkbarkeit der primären Werkstückhalteeinheit und der sekundären Werkstückhalteeinheit eine Maschinenkinematik, bei der die Werkzeugspindel ausschließlich translatorisch bewegt wird. Mit anderen Worten ist die Werkzeugspindel gemäß dieser Ausgestaltung nicht mit einem Schwenkantrieb versehen. Es versteht sich, dass die Werkzeugspindel zur Rotation eines Werkzeugs um eine Spindelachse ausgebildet ist.

Die Werkzeugspindel kann demgemäß kompakt gestaltet sein. Wenn auf einen Schwenkantrieb bei der Werkzeugspindel verzichtet wird, kann die Werkzeugspindel bleichwohl in drei translatorischen Achsen verfahrbar gestaltet sein. Gleichwohl lassen sich träge Massen begrenzen, weil kein aufwendiger Schwenkantrieb in eine solche Gestaltung integriert werden muss. Dies kann sich günstig auf die Dynamik und das Beschleunigungsverhalten auswirken. Ferner erhöht sich auf diese Weise die Steifigkeit, weil die kompakte Gestaltung zu einer deutlich verringerten Verformungsneigung bei der Bearbeitung führt.

Die Verfahrwege in der X-Richtung, der Y-Richtung und der Z-Richtung lassen sich an zu erwartende Werkstückabmessungen anpassen. Mit einer einzigen Werkzeugspindel kann eine Mehrseitenbearbeitung, insbesondere eine Komplettbearbeitung und/oder Sechs-Seitenbearbeitung durchgeführt werden. Dies kann mit hoher Ressourceneffizienz erfolgen, beispielhaft im Hinblick auf Bauraum, Energieverbrauch und/oder Verbrauch an Kühlschmiermittel (KSS).

Insbesondere ist die Werkzeugmaschine für die Dreh-Fräsbearbeitung gestaltet. Vorzugsweise lässt sich mit der Werkzeugmaschine eine Komplettbearbeitung realisieren, wenn das Werkstück zwischen der primären Werkstückhalteeinheit und der sekundären Werkstückhalteeinheit ohne weiteren Handhabungsaufwand direkt übergeben wird.

Die primäre Werkstückhalteeinheit und die sekundäre Werkstückhalteeinheit sind in zumindest einer Betriebsstellung einander zugewandt und koaxial zueinander orientiert und axial voneinander versetzt. Zumindest die primäre Werkstückhalteeinheit ist als Drehspindel gestaltet. Auf diese Weise ist eine Drehbearbeitung mit stehendem Werkzeug möglich. Die koaxiale Orientierung kann auch als gemeinsame Drehorientierung bezeichnet werden. In der koaxialen Orientierung kann ein Werkstück sowohl an der primären Werkstückhalteeinheit als auch an der sekundären Werkstückhalteeinheit befestigt sein. Zumindest in beispielhaften Ausgestaltungen können die primäre Werkstückhalteeinheit und die sekundäre Werkstückhalteeinheit jeweils das Werkstück zumindest zeitweise alleine halten, so dass entsprechende Endbereiche bearbeitet werden können, die nicht zugänglich sind, wenn die jeweils andere Werkstückhalteeinheit an das Werkstück angreift.

Die Verschwenkbarkeit der primären Werkstückhalteeinheit und der sekundären Werkstückhalteeinheit kann ferner für einen Werkstücktransfer durch die Werkzeugmaschine hindurch genutzt werden. Beispielsweise kann ein Beladen des Arbeitsraums der Werkzeugmaschine durch die primäre Werkstückhalteeinheit hindurch erfolgen. Gemäß dieser Ausgestaltung ist die primäre Werkstückhalteeinheit als Hohlspindel gestaltet.

Beispielsweise weist die primäre Werkstückhalteeinheit neben der primären Schwenkachse eine weitere Schwenkachse (sogenannte A-Achse) auf, die durch die Drehspindel bereitgestellt wird. Auf diese Weise ist eine Fünf-Achs-Bearbeitung von Werkstücken ermöglicht, die in die Drehspindel eingespannt sind.

Die Werkzeugspindel ist ausschließlich linear verfahrbar und stellt keine zusätzliche Schwenkachse bereit. Die mit einer Drehspindel versehene primäre Werkstückhalteeinheit stellt eine Rotationsachse bereit. Die sekundäre Werkstückhalteeinheit kann ebenso eine Rotationsachse (in Form einer Gegenspindel) bereitstellen, zumindest in beispielhaften Ausgestaltungen.

Die offenbarungsgemäße Werkzeugmaschine ist zum Drehen und zum Fräsen geeignet. Wenn ein Werkstück sowohl von der primären als auch von der sekundären Werkstückhalteeinheit gleichzeitig gehalten wird, kann das Werkstück in vier Achsen bearbeitet werden. Wenn das Werkstück nur einseitig eingespannt ist, kann das Werkstück in fünf Achsen bearbeitet werden. Wenn das Werkstück zwischen der primären und der sekundären Werkstückhalteeinheit übergeben wird, ist eine Bearbeitung in sechs Achsen ermöglicht.

In der Drehorientierung ist die Längsachse (Rotationsachse) des Werkstücks parallel zur X-Achse orientiert. Die X-Achse ist horizontal orientiert. Die Y-Achse ist orthogonal zur X-Achse und ebenso horizontal orientiert. Die X-Achse und die Y-Achse bilden eine Horizontalebene. Die Z-Achse ist orthogonal zur X-Achse und orthogonal zur Y-Achse orientiert. Die Z-Achse ist eine Vertikalachse. Eine Längsachse (Rotationsachse) der Werkzeugspindel ist permanent vertikal und folglich parallel zur Z-Achse orientiert.

In einer beispielhaften Ausgestaltung weist der Y-Schlitten ein Schrägbett auf, an dem der X-Schlitten geführt ist. Eine X-Führung dient zur Führung des X-Schlittens. Eine Neigung der X-Führung gegenüber der Horizontalen liegt etwa im Bereich zwischen 30° und 60°, insbesondere im Bereich zwischen 40° und 50°, insbesondere bei etwa 45°. Auf diese Weise ergibt sich eine kompakte und hochsteife Gestaltung. Dies führt zu einer geringen Verformungsneigung der Maschinenkinematik beim Betrieb der Werkzeugmaschine.

Gemäß einer weiteren beispielhaften Ausgestaltung weist das Gestell ein Flachbett auf, an dem der Y-Schlitten geführt ist. Eine Y-Führung dient zur Führung des Y-Schlittens. Die Y-Führung ist beispielsweise an einer Oberseite des Maschinengestells ausgebildet.

Gemäß einer weiteren beispielhaften Ausgestaltung weist der X-Schlitten eine vertikale Stirnwand auf, an der der Z-Schlitten geführt ist. Die vertikale Stirnwand trägt eine Z-Führung, an der der Z-Schlitten geführt ist. Die vertikale Stirnwand ist dem Arbeitsraum zugewandt. Der Z-Schlitten trägt die vertikal orientierte Werkzeugspindel.

In einer beispielhaften Ausgestaltung ist der Verfahrweg der Werkzeugspindel in der X-Richtung größer als der Verfahrweg der Werkzeugspindel in der Z-Richtung. Ferner ist der Verfahrweg der Werkzeugspindel in der Z-Richtung größer als der Verfahrweg der Werkzeugspindel in der Y-Richtung.

Gemäß einer weiteren beispielhaften Ausgestaltung ist die sekundäre Werkstückhalteeinheit entlang einer Linearachse translatorisch verfahrbar, die parallel zur ersten horizontalen Achse orientiert ist. Mit anderen Worten ist also die sekundäre Werkstückhalteeinheit in der X-Richtung translatorisch verfahrbar.

Auf diese Weise kann ein Abstand zwischen der primären Werkstückhalteeinheit und der sekundären Werkstückhalteeinheit in der X-Richtung verändert werden. Dies vereinfacht beispielhaft die Übergabe des Werkstücks zwischen der primären Werkstückhalteeinheit und der sekundären Werkstückhalteeinheit. Dies kann beispielhaft auch eine Rückseitenbearbeitung/Endenbearbeitung des Werkstücks an seiner sechsten Seite umfassen, die zuvor von der primären Werkstückhalteeinheit verdeckt wurde.

Ferner kann die sekundäre Werkstückhalteeinheit beim Beladen und/oder Entladen genutzt werden. Etwa dann, wenn Halbzeuge in Form von Stangenmaterial dem Arbeitsraum durch die (hohle) Drehspindel der primären Werkstückhalteeinheit zugeführt werden, kann die sekundäre Werkstückhalteeinheit ein stirnseitiges Ende des Halbzeugs greifen und entlang der ersten horizontalen Achse ziehen. Dies nicht einschränkend zu verstehen. Die Freiheitsgrade der primären Werkstückhalteeinheit und der sekundären Werkstückhalteeinheit erlauben ein zumindest teilautomatisiertes Werkstückhandling. Auf diese Weise kann etwa ein mit der Werkzeugmaschine gekoppeltes Stangenmagazin (Stangenlader) einfach gestaltet sein, weil die Werkzeugmaschine selbst mit der gegebenen Kinematik Transferaufgaben übernehmen kann.

Ferner kann auf diese Weise die sekundäre Werkstückhalteeinheit das Werkstück in der horizontalen Orientierung relativ zur primären Werkstückhalteeinheit in Richtung der ersten horizontalen Achse (X-Richtung) bewegen. Somit kann das Werkstück aus der primären Werkstückhalteeinheit herausgezogen werden. Ferner kann auf diese Weise ein abgetrennter Abschnitt des Werkstücks, der in der sekundären Werkstückhalteeinheit eingespannt ist, von der primären Werkstückhalteeinheit wegbewegt werden.

In einer beispielhaften Ausgestaltung ist die primäre Werkstückhalteeinheit in der ersten horizontalen Richtung X, der zweiten horizontalen Richtung Y und der vertikalen Richtung Z translatorisch unbeweglich am Gestell gelagert. In einer beispielhaften Ausgestaltung ist die sekundäre Werkstückhalteeinheit in der zweiten horizontalen Richtung Y und der vertikalen Richtung Z und der vertikalen Richtung Z unbeweglich am Gestell gelagert. In einer beispielhaften Ausgestaltung stellt die primäre Werkstückhalteeinheit ausschließlich die primäre Schwenkachse und die Drehachse bereit.

In einer beispielhaften Ausgestaltung weist das Gestell einen primären Gestellabschnitt, an dem die Werkzeugspindel und die primäre Werkstückhalteeinheit aufgenommen sind, und einen sekundären Gestellabschnitt auf, an dem die sekundäre Werkstückhalteeinheit aufgenommen ist. Auf diese Weise können die Werkzeugspindel, die primäre Werkstückhalteeinheit und die sekundäre Werkstückhalteeinheit günstig relativ zueinander positioniert werden. In einer beispielhaften Ausgestaltung ist die primäre Werkstückhalteeinheit fliegend am primären Gestellabschnitt gelagert, dies gilt insbesondere für die Lagerung des primären Schwenkträgers. In einer beispielhaften Ausgestaltung ist die sekundäre Werkstückhalteeinheit fliegend am sekundären Gestellabschnitt gelagert, dies gilt insbesondere für die Lagerung des sekundären Schwenkträgers.

Gemäß einer weiteren beispielhaften Ausgestaltung ist am Gestell beim sekundären Gestellabschnitt eine X-Führung für die sekundäre Werkstückhalteeinheit angeordnet. Alternativ oder zusätzlich ist beim primären Gestellabschnitt eine Y-Führung für die Werkzeugspindel angeordnet. Damit sind die Bereiche, bei denen Linearführungen am Gestell angeordnet sind, in unterschiedlichen Bereichen vorgesehen und voneinander beabstandet.

Gemäß einer weiteren beispielhaften Ausgestaltung stellt der sekundäre Gestellabschnitt ein Flachbett bereit, das die X-Führung trägt. Mit anderen Worten weist beispielsweise der primären Gestellabschnitt eine Oberseite auf, die die Y-Führung für die Werkzeugspindel trägt. Ferner weist der sekundäre Gestellabschnitt eine Oberseite auf, die die X-Führung für die sekundäre Werkstückhalteeinheit trägt. Damit ergibt sich eine kompakte Bauweise des Gestells, und zwar auch hinsichtlich der Höhenerstreckung (in der Z-Richtung).

Gemäß einer weiteren beispielhaften Ausgestaltung weist das Gestell zwischen dem primären Gestellabschnitt und dem sekundären Gestellabschnitt eine Aussparung auf, die einen Freiraum für eine Schwenkbewegung der primären Werkstückhalteeinheit und/oder der sekundären Werkstückhalteeinheit bereitstellt. In einer beispielhaften Ausgestaltung weist das Gestell folglich eine gemeinsame Basis auf, sowie Strukturen, die sich vertikal ausgehend von der Basis nach oben erstrecken und den primären Gestellabschnitt und den sekundären Gestellabschnitt bilden. In einer beispielhaften Ausgestaltung ist das Gestell bei Betrachtung einer Querschnittsebene, die parallel zur Y-Z-Ebene ist, näherungsweise U-förmig gestaltet, wobei ein Schenkel des (aufrecht stehenden) U dem primären Gestellabschnitt und der andere Schenkel des U dem sekundären Gestellabschnitt zugeordnet ist. Die Basis des U ist dann dem Boden zugewandt.

In einer beispielhaften Ausgestaltung erstreckt sich die Aussparung in der X-Richtung durch das Gestell hindurch. Auf diese Weise ist sowohl für die primäre Werkstückhalteeinheit als auch für die sekundäre Werkstückhalteeinheit genügend Freiraum für die jeweilige Schwenkbewegung beim Verschwenken um die primäre Schwenkachse und die sekundäre Schwenkachse gegeben.

In einer beispielhaften Ausgestaltung sind die primäre Werkstückhalteeinheit und die sekundäre Werkstückhalteeinheit ausgehend von einer gemeinsamen koaxialen Orientierung gegensinnig verschwenkbar, etwa beim Übergang zwischen einer horizontalen Orientierung und einer vertikalen Orientierung. Mit anderen Worten sieht ein Beobachter, der an einer der Werkzeugspindel gegenüberliegenden Seite auf den Arbeitsraum blickt beim Übergang zwischen der horizontalen Orientierung und der vertikalen Orientierung bei der einen Werkstückhalteeinheit eine Schwenkbewegung im Uhrzeigersinn und bei der anderen Werkstückhalteeinheit eine Schwenkbewegung gegen den Uhrzeigersinn.

Der Verschwenkbereich der primären Werkstückhalteeinheit und der sekundären Werkstückhalteeinheit beträgt beispielsweise zumindest 90° (Winkelgrad). In einer beispielhaften Ausgestaltung sind die primäre Werkstückhalteeinheit und die sekundäre Werkstückhalteeinheit um zumindest 90° zwischen einer horizontalen Orientierung und einer vertikalen Orientierung verschwenkbar. Der Verschwenkbereich umfasst beispielsweise zwischen -10° und +100° oder zwischen +10° und -100°, wenn 0° einer horizontalen Orientierung und 90° oder -90° einer vertikalen Orientierung entspricht, je nach Drehsinn.

Bei der vertikalen Orientierung nehmen die primäre Werkstückhalteeinheit und die sekundäre Werkstückhalteeinheit üblicherweise eine stehende Orientierung ein, im Gegensatz zur hängenden Werkzeugspindel. Bei der stehenden Orientierung würde ein eingespanntes Werkstück ausgehend von der Werkstückhalteeinheit vertikal in Richtung auf die Werkzeugspindel nach oben hervorragen.

Die Aussparung im Gestell stellt also genügend Freiraum für die Schwenkbewegung der primären Werkstückhalteeinheit und der sekundären Werkstückhalteeinheit bereit. Dies erlaubt eine besonders kompakte Gestaltung der Werkzeugmaschine, weil der dortige Bauraum (unterhalb des horizontal orientierten Stangenmaterials) ohnehin vorhanden ist. Der primäre Gestellabschnitt und der sekundäre Gestellabschnitt tragen Linearführungen für die Werkzeugspindel und die sekundäre Werkstückhalteeinheit. Der Zwischenraum zwischen dem primären Gestellabschnitt und dem sekundären Gestellabschnitt eignet sich für die Aussparung. Ein Vorteil ist, dass die primäre Werkstückhalteeinheit und die sekundäre Werkstückhalteeinheit ausgehend von der horizontalen Orientierung nach unten verschwenkt werden können, um eine vertikale Orientierung einzunehmen. Durch eine solche Schwenkbewegung "nach unten" kann das jeweilige Werkstück "nach oben" verschwenkt und in günstiger Weise der Werkzeugspindel präsentiert werden.

Gemäß einer weiteren beispielhaften Ausgestaltung ragen die primäre Werkstückhalteeinheit und die sekundäre Werkstückhalteeinheit gleichgerichtet aus dem Gestell heraus, insbesondere in Richtung auf eine einem Bediener zugewandte Seite des Arbeitsraums. Mit anderen Worten sind gemäß dieser Ausgestaltung die primäre Werkstückhalteeinheit und die sekundäre Werkstückhalteeinheit mit ihren Schwenkträgern nicht an gegenüberliegenden Gestellabschnitten, sondern an ein und demselben Gestellabschnitt angeordnet. Auf diese Weise können beide Werkstückhalteeinheiten mit ihren Schwenkachsen günstig für einen Bediener einsehbar positioniert sein. Ferner kann sich die Grundfläche des Gestells und der Werkzeugmaschine insgesamt weiter verringern.

Gemäß einer weiteren beispielhaften Ausgestaltung ist die Linearachse der sekundären Werkstückhalteeinheit unterhalb der Y-Führung für die zweite horizontale Achse und insbesondere unterhalb der X-Führung für die erste horizontale Achse am Gestell angeordnet. Das Gestell kann also entlang seiner vertikalen Erstreckung (Z-Erstreckung) voneinander in der Z-Richtung beabstandete Führungsabschnitte aufweisen, wobei zunächst die X-Führung für die lineare Achse der sekundären Werkstückhalteeinheit und hiervon beabstandet die Y-Führung für die zweite horizontale Achse angeordnet sind. Die Y-Führung für die zweite horizontale Achse trägt wiederum den Y-Schlitten, an dem die X-Führung für die erste horizontale Achse ausgebildet ist.

Gemäß einer weiteren beispielhaften Ausgestaltung ist das Gestell als Ständer gestaltet, der eine Stirnwand aufweist, über die Schwenkträger der primären und der sekundären Werkstückhalteeinheit herausragen, insbesondere in Richtung auf eine Bedienerseite. Auch dies sorgt für eine gute Übersicht im Arbeitsraum.

Gemäß einer weiteren beispielhaften Ausgestaltung weist das Gestell unterhalb des Y-Schlittens eine Gestellöffnung auf, in der die sekundäre Werkstückhalteeinheit gelagert und entlang der Linearachse translatorisch verfahrbar ist. Beispielhaft ist am Grund der Gestellöffnung ein Flachbett ausgebildet, das die X-Führung für die lineare Achse der sekundären Werkstückhalteeinheit trägt.

Gemäß einer weiteren beispielhaften Ausgestaltung ist eine X-Führung für die sekundäre Werkstückhalteeinheit in der Gestellöffnung angeordnet, und/oder wobei oberhalb der Gestellöffnung beim Gestell eine Y-Führung für den Y-Schlitten angeordnet. Wenn die X-Führung an einem Flachbett des Gestells und auch die Y-Führung für die zweite horizontale Achse an einem Flachbett des Gestells ausgebildet sind, weist das Gestell zwei zueinander vertikal versetzte Flachbetten auf, von denen eines beispielsweise an einer Oberseite des Gestells und ein anderes in der Gestellöffnung angeordnet ist.

Gemäß einer weiteren beispielhaften Ausgestaltung weist das Gestell eine erste Wange und eine zweite Wange auf, zwischen denen die Gestellöffnung ausgebildet ist, und wobei das Gestell insbesondere eine obere Traverse umfasst, die sich von der ersten Wange zur zweiten Wange erstreckt. Auf diese Weise ergibt sich auch bei kompakter Gestaltung eine hohe Steifigkeit. Die Gestellöffnung stellt genügend Raum für die verfahrbare sekundäre Werkstückhalteeinheit bereit.

Gemäß einer weiteren beispielhaften Ausgestaltung umfasst die Gestellöffnung eine Y-Ausnehmung, die sich parallel zur zweiten horizontalen Achse erstreckt, und eine X-Ausnehmung, die sich parallel zur ersten horizontalen Achse erstreckt, wobei die X-Ausnehmung in die Y-Ausnehmung mündet. Beispielhaft erstreckt sich die X-Ausnehmung in der ersten horizontalen Richtung (X-Richtung) durch lediglich eine der beiden Wangen des Gestells. Beispielhaft erstreckt sich die Y-Ausnehmung vollständig in der zweiten horizontalen Richtung (Y-Richtung) vollständig durch das Gestell hindurch.

Gemäß einer weiteren beispielhaften Ausgestaltung durchdringt die X-Ausnehmung das Gestell ausgehend von der Y-Ausnehmung nach außen. Dies erlaubt eine gute Zugänglichkeit. Auf diese Weise ist die Y-Ausnehmung von drei Seiten zugänglich.

Gemäß einer weiteren beispielhaften Ausgestaltung beherbergt die die X-Ausnehmung einen Antrieb für die translatorische Bewegung der sekundären Werkstückhalteeinheit. Somit kann der Antrieb günstig mit geringem zusätzlichen Bauraumbedarf integriert werden.

Gemäß einer weiteren beispielhaften Ausgestaltung ist die Werkzeugspindel eine permanent vertikal orientierte Werkzeugspindel, wobei die Werkzeugspindel insbesondere die einzige Werkzeugspindel der Werkzeugmaschine ist. Beispielhaft handelt es sich bei der Werkzeugspindel um eine hängende Spindel, bei der das Werkzeug nach unten aus einem Werkzeughalter der Werkzeugspindel herausragt. Gemäß einer beispielhaften Ausgestaltung ist die vertikal orientierte Werkzeugspindel schwenkantriebsfrei gestaltet.

Gemäß einer weiteren beispielhaften Ausgestaltung ist die sekundäre Werkstückhalteeinheit als schwenkbare Gegenspindel, schwenkbarer Rundtisch und/oder als schwenkbarer Greifer gestaltet. Beispielsweise ist die sekundäre Werkstückhalteeinheit zumindest als um die sekundäre Schwenkachse verschwenkbar Greifer gestaltet. Beispielsweise ist die sekundäre Werkstückhalteeinheit als um die sekundäre Schwenkachse verschwenkbarer Rundtisch mit Haltefunktion (etwa als Greifer) für das Werkstück gestaltet. Beispielsweise ist die sekundäre Werkstückhalteeinheit als um die sekundäre Schwenkachse verschwenkbare Gegenspindel (mit Drehantrieb) und Werkstückspanneinheit gestaltet. Bei der Gestaltung als schwenkbarer Rundtisch oder als schwenkbare Gegenspindel kann die sekundäre Werkstückhalteeinheit zusätzlich eine Schwenkachse (A-Achse) für Schwenkbewegungen um die Längsachse des Werkstücks bereitstellen.

Für Bearbeitungen, bei denen das Werkstück sowohl an der primären Werkstückhalteeinheit als auch in der sekundären Werkstückhalteeinheit eingespannt ist, kann die sekundäre Werkstückhalteeinheit auch als mitlaufende Werkstückhalteeinheit gestaltet sein, wenn der Antrieb (zumindest zeitweise) ausschließlich über die primäre Werkstückhalteeinheit erfolgt.

Wenn die sekundäre Werkstückhalteeinheit als Gegenspindel oder schwenkbarer Rundtisch gestaltet ist, kann ein Werkstück, das in der sekundären Werkstückhalteeinheit eingespannt ist, in fünf Achsen bearbeitet werden. Dies ist für die Rückseitenbearbeitung nutzbar. Gemeinsam mit der primären Werkstückhalteeinheit ist eine Komplettbearbeitung in sechs Achsen ermöglicht, wenn das Werkstück zwischen der primären Werkstückhalteeinheit und der sekundären Werkstückhalteeinheit übergeben wird.

Wenn die sekundäre Werkstückeinheit als schwenkbarer Greifer gestaltet ist, kann ein Werkstück, das in der sekundären Werkstückhalteeinheit eingespannt ist in zumindest vier Achsen bearbeitet werden. Dies ist für eine Rückseitenbearbeitung nutzbar.

Gemäß einer weiteren beispielhaften Ausgestaltung weisen die primäre Werkstückhalteeinheit und die sekundäre Werkstückhalteeinheit als Gleichteile gestaltete Schwenkträger auf. Dies vereinfacht den Aufbau der Werkzeugmaschine, auch der Aufwand für Wartung und Reparatur lässt sich dadurch reduzieren. Ferner ergeben sich auf diese Weise bei der primären Werkstückhalteeinheit und der sekundären Werkstückhalteeinheit ähnliche Positioniertoleranzen um die primäre Schwenkachse und die sekundäre Schwenkachse.

Gemäß einer weiteren beispielhaften Ausgestaltung ist der Schwenkträger der sekundären Werkstückhalteeinheit schwenkbar an einem X-Schlitten gelagert, der in einer sekundären horizontalen Linearachse parallel zur ersten horizontalen Achse relativ zum Gestell translatorisch verfahrbar ist. Der X-Schlitten der sekundären Werkstückhalteeinheit kann auch als sekundärer X-Schlitten bezeichnet werden.

Gemäß einer weiteren beispielhaften Ausgestaltung ist der Schwenkträger der primären Werkstückhalteeinheit schwenkbar an dem Gestell gelagert. Insbesondere ist der Schwenkträger der primären Werkstückhalteeinheit schwenkbar am primären Gestellabschnitt gelagert.

Gemäß einer weiteren beispielhaften Ausgestaltung ist der Schwenkträger der primären Werkstückhalteeinheit schwenkbar in einem Schwenkgehäuse gelagert, das in einer Gestellöffnung im Gestell angeordnet und fest mit dem Gestell verbunden ist. Die primäre Werkstückhalteeinheit ist nicht relativ zum Gestell verfahrbar, sondern beispielsweise mit dem Gestell verschraubt und/oder verbolzt.

Beispielhaft ist die Gestellöffnung eine Öffnung im primären Gestellabschnitt, die sich parallel zur zweiten horizontalen Achse (Y-Richtung) durch den primären Gestellabschnitt hindurch erstreckt. Mit anderen Worten erstreckt sich die Gestellöffnung zwischen einer dem Arbeitsraum zugewandten Seite des primären Gestellabschnitts und einer vom Arbeitsraum abgewandten Seite des primären Gestellabschnitts durch den primären Gestellabschnitt hindurch.

Damit wird der Bauraum am Gestell, der sich durch die Erstreckung des X-Schlittens in der ersten horizontalen Richtung (X-Richtung) und die daran angepasste Y-Führung ergibt, günstig genutzt. Dies kann eine Gestaltung umfassen, in der der primäre Gestellabschnitt zwei voneinander beabstandete Wangen aufweist, die die Y-Führung bilden, wobei zwischen den beiden Wangen die Gestellöffnung ausgebildet ist, in der die primäre Werkstückhalteeinheit angeordnet ist. Dies schließt nicht aus, dass die Gestellöffnung groß genug ist, um zusätzlich einen Zugang für Werkstückhandling, Werkzeughandling oder dergleichen bereitzustellen.

Gemäß einer weiteren beispielhaften Ausgestaltung ist die primäre Drehspindel als schwenkbare Hohlspindel gestaltet, die eine Spanneinheit zum Festhalten eines eingeführten Halbzeugs aufweist.

Auf diese Weise können Halbzeuge an einer Rückseite in die Hohlspindel eingeschoben werden. Dies vereinfacht das Beladen der Werkzeugmaschine. An der Vorderseite kann zumindest ein Abschnitt des Halbzeugs aus der Hohlspindel herausragen und über diese überstehen. Dieser Abschnitt dient dann als Werkstück.

Mit anderen Worten ist die primäre Werkstückhalteeinheit zur Aufnahme und Handhabung von Stangenmaterial geeignet. Es kann sich um Rundmaterial aber auch um Material mit nicht-rundem Querschnitt handeln. Die primäre Werkstückhalteeinheit ist dazu ausgestaltet, Stangenmaterial einer bestimmten Länge vollständig aufzunehmen. Auf Basis dieses Halbzeugs können dann mehrere Abschnitte definiert werden, in denen nacheinander jeweils ein Werkstück erzeugt wird. Mit anderen Worten muss also der als Ausgangsmaterial für das Werkstück dienende Abschnitt nicht zuvor von der Stange getrennt werden. Die Stange kann vollständig von der primären Werkstückhalteeinheit aufgenommen werden. Ein Trennen des Werkstücks vom Stangenmaterial kann dann erfolgen, wenn die primäre Werkstückhalteeinheit und die sekundäre Werkstückhalteeinheit gleichzeitig das Stangenmaterial halten. Dies kann auch für einen Stangenvorschub genutzt werden, der durch die translatorische Bewegung der sekundären Werkstückhalteeinheit ermöglicht ist.

Nach einer Bearbeitung des Werkstücks in diesem Zustand kann die sekundäre Werkstückhalteeinheit das Werkstück greifen. Zumindest zeitweise kann das Werkstück sowohl von der primären als auch von der sekundären Werkstückhalteeinheit festgehalten werden. Das Werkstück kann dann vom Halbzeug und damit auch von der primären Werkstückhalteeinheit getrennt werden. Die sich ergebende Rückseite kann bedarfsweise bearbeitet werden, wenn das Werkstück von der sekundären Werkstückhalteeinheit gehalten wird.

Gemäß einer weiteren beispielhaften Ausgestaltung weist die Drehspindel der primären Werkstückhalteeinheit eine extern betätigbare Spanneinheit zum Spannen des Halbzeugs auf. In einer beispielhaften Ausgestaltung ist die Spanneinheit in einer horizontalen Orientierung der primären Werkstückhalteeinheit extern betätigbar.

Auf diese Weise kann die Drehspindel besonders kompakt gestaltet sein. Dies wirkt sich vorteilhaft bei der Schwenkbewegung aus. Die Aktivierung der Spanneinheit kann durch externe Elemente erfolgen, die beispielsweise in der horizontalen Orientierung auf die Spanneinheit einwirken können. Auf diese Weise wird eine Spannvorrichtung geschaffen, die teilweise innerhalb der Drehspindel und teilweise außerhalb der Drehspindel verbaut ist. Beispielsweise kann die Spanneinheit grundsätzlich in der Orientierung der primären Werkstückhalteeinheit betätigt werden, in der auch ein Beladen mit Stangenmaterial erfolgen würde.

Es ist ferner von Vorteil, wenn am Gestell der Werkzeugmaschine genügend Freiraum vorhanden ist, damit die Drehspindel mit einem dort eingespannten Halbzeug zumindest in bestimmten Winkelbereichen verschwenkbar ist. Die maximale Länge des nutzbaren Halbzeugs ist üblicherweise an den möglichen Bauraum und die gewünschten Schwenkwinkel angepasst.

Gemäß einer weiteren beispielhaften Ausgestaltung sitzt das Gestell der Werkzeugmaschine auf einem Unterbau, dessen Höhe (Z-Erstreckung) zumindest die Hälfte der Höhe (Z-Erstreckung) des Gestells der Werkzeugmaschine aufweist. Dies unterstreicht die kompakte Gestaltung, für eine günstige Position des Arbeitsraums kann das Gestell der Werkzeugmaschine erhöht angeordnet sein. In einer beispielhaften Ausgestaltung ergibt sich die statische Steifigkeit der Werkzeugmaschine unabhängig vom Unterbau. Auf diese Weise hat der Unterbau nur einen geringen Einfluss auf den Betriebszustand der Werkzeugmaschine. Mit anderen Worten kann das Gestell der Werkzeugmaschine unter Steifigkeitsgesichtspunkten auch ohne den Unterbau genutzt werden. Das Gestell ist also gemäß dieser Ausführungsform mit anderen Worten in sich steif und selbstragend. Der Unterbau dient lediglich zur erhöhten Anordnung, zumindest in beispielhaften Ausgestaltungen.

Gemäß einem weiteren Aspekt bezieht sich die vorliegende Offenbarung auf eine Fertigungsanlage mit einer Werkzeugmaschine gemäß zumindest einer der hierin beschriebenen Ausgestaltungen, einem Stangenmagazin zur Aufnahme und Bereitstellung stangenförmiger Halbzeuge, und mit einem Lademechanismus, der dazu ausgebildet ist, zumindest in einer Horizontalstellung der primären Werkstückhalteeinheit Halbzeuge in die Drehspindel einzuführen.

Das Stangenmagazin kann als Kurzstangenmagazin gestaltet sein. Das Stangenmagazin und der Lademechanismus können gemeinsam einen Stangenlader ausbilden, mit dem Stangenmaterial bereitgestellt und geladen werden kann.

Gemäß einer beispielhaften Ausgestaltung ist die Länge der bereitgestellten Halbzeuge an einen für die Schwenkbewegung der primären Werkstückhalteeinheit bereitgestellten Bauraum angepasst. Mit anderen Worten ist also das Stangenmagazin dazu ausgestaltet, Stangen einer bestimmten Länge aufzunehmen und bereitzustellen, die beim Beladen vollständig von der als Drehspindel gestalteten primären Werkstückhalteeinheit übernommen werden können. Die Gestaltung der Werkzeugmaschine erlaubt bei Nutzung solcher Stangen die Schwenkbewegung der primären Werkstückhalteeinheit um die primäre Schwenkachse.

Beispielhaft haben die Stangen eine Länge von maximal 800 mm. Beispielhaft haben die Stangen eine Länge von maximal 600 mm. Beispielhaft haben die Stangen eine Länge von maximal 500 mm. Der erforderliche Bauraum ergibt sich durch den gewünschten Schwenkbereich.

In einer beispielhaften Ausgestaltung betragen die Verfahrwege der Werkzeugspindel in der X-Richtung etwa 320 mm, in der Y-Richtung etwa 75 mm und in der Z-Richtung etwa 120 m. Auf diese Weise ist die Kinematik der Werkzeugmaschine gut für die Bearbeitung von Kurzstangen geeignet. Anwendungen finden sich beispielsweise in der Medizintechnik, der Feinmechanik, und der Uhren- und Schmuckindustrie. Andere Anwendungsfelder sind denkbar.

Beispielhaft beträgt ein Durchmesser (oder Größtmaß des Querschnittsprofils) des Stangematerials 30 mm oder weniger. Beispielhaft beträgt ein Durchmesser (oder Größtmaß des Querschnittsprofils) des Stangematerials 26 mm oder weniger. Bei den Stangen kann es sich um Rundprofile oder andere Profile handeln. Üblicherweise handelt es sich um Stangen aus Stahlwerkstoffen. Auch andere Werkstoffe sind denkbar, etwa Leichtmetalle und dergleichen.

Es kann sich dabei insgesamt eine äußerst kompakte Bauform ergeben. Werkstücke, die auf Basis der gegebenen Abmessungen (beispielsweise Stangen mit Länge von 500 mm und Durchmesser von 26 mm) erzeugt werden können, lassen sich besonders effizient und mit geringem Ressourcenverbrauch herstellen.

In einer beispielhaften Ausgestaltung weist der Lademechanismus einen Schieber auf, der strangförmige Halbzeuge linear in der ersten Richtung verschiebt, um diese in die Drehspindel der primären Werkstückhalteeinheit einzuschieben.

Gemäß einer weiteren beispielhaften Ausgestaltung weist die Fertigungsanlage ferner eine mittelbar oder unmittelbar am Gestell montierte Betätigungseinheit für eine Spanneinheit der Drehspindel der primären Werkstückhalteeinheit auf. Somit kann die Spanneinheit der Drehspindel extern betätigt werden. Auf diese Weise kann die Drehspindel kompakt gestaltet sein. Beispielhaft weist eine Spanneinheit der Drehspindel ein Federpaket oder dergleichen auf, wobei ein Entlasten des Federpakets durch Nutzung der externen Betätigungseinheit ermöglicht ist.

Gemäß einer weiteren beispielhaften Ausgestaltung ist die Betätigungseinheit dazu ausgebildet, in einer horizontalen Orientierung der primären Werkstückhalteeinheit auf die Spanneinheit der Drehspindel einzuwirken, um diese zu aktivieren oder zu deaktivieren. In der horizontalen Orientierung kann ein Stangenvorschub erfolgen. In der horizontalen Orientierung kann auch ein Beladen mit einer neuen Stange erfolgen.

Gemäß einer weiteren beispielhaften Ausgestaltung der Fertigungsanlage ist eine gemeinsame Steuerung für den Lademechanismus, die primäre Werkstückhalteeinheit, die sekundäre Werkstückhalteeinheit und die Betätigungseinheit für die Spanneinheit vorgesehen, so dass ein in die Drehspindel eingeführtes Halbzeug schrittweise verschiebbar ist, um nacheinander mehrere Werkstücke zu erzeugen. Mit anderen Worten kann das Stangenmaterial abschnittsweise bearbeitet werden, um nacheinander mehrere Werkstücke zu erzeugen. Das abschnittsweise Verschieben kann ein Ziehen durch die sekundäre Werkstückhalteeinheit und/oder ein Nachschieben durch einen Schieber des Lademechanismus umfassen.

Gemäß einem weiteren Aspekt bezieht sich die vorliegende Offenbarung auf ein Verfahren zur Bearbeitung von Stangenmaterial mit einer Fertigungsanlage gemäß zumindest einer der hierin beschriebenen Ausgestaltungen, mit den folgenden Schritten:
- Bereitstellung zumindest eines Halbzeugs durch das Stangenmagazin,
- Positionierung der primären Werkstückhalteeinheit in der horizontalen Orientierung zur Aufnahme des Halbzeugs,
- Beladen der Drehspindel der primären Werkstückhalteeinheit mit dem Lademechanismus,
- Bearbeitung des Halbzeugs zur Erzeugung zumindest eines Werkstücks, umfassend eine Drehbewegung der Drehspindel sowie eine Schwenkbewegung der primären Werkstückhalteeinheit zur Erzeugung der gewünschten Kontur,
   wobei die Bearbeitung mit der Werkzeugspindel erfolgt, die linear in drei translatorischen Achsen relativ zum Werkstück verfahrbar ist,
- Festhalten des Werkstücks mit der sekundären Werkstückhalteeinheit,
- Trennen des Werkstücks vom Halbzeug in einem Zustand, in dem die primäre Werkstückhalteeinheit und die sekundäre Werkstückhalteeinheit das Werkstück gemeinsam halten, und
- Bearbeitung einer zuvor nicht zugänglichen Rückseite des von der sekundären Werkstückhalteeinheit gehaltenen Werkstücks.

Auch auf diese Weise wird die Aufgabe der Offenbarung gelöst.

Es versteht sich, dass das Werkstück zumindest zeitweise auch gleichzeitig von der primären Werkstückhalteeinheit und der sekundären Werkstückhalteeinheit festgehalten werden kann. Dies erlaubt beispielsweise eine Drehbearbeitung mit beidseitig abgestütztem Werkstück.

Gemäß einer weiteren beispielhaften Ausgestaltung umfasst das Beladen der Drehspindel der primären Werkstückhalteeinheit mit dem Lademechanismus eine Betätigung einer Spanneinheit der Drehspindel durch eine externe Betätigungseinheit, in der horizontalen Orientierung der primären Werkstückhalteeinheit. Auf diese Weise kann eine in die Drehspindel integrierte Spanneinheit extern betätigt werden.

Gemäß einer weiteren beispielhaften Ausgestaltung wird nach dem Trennen des Werkstücks vom Halbzeug die sekundäre Werkstückeinheit mit dem dort eingespannten Werkstück entlang einer zur ersten horizontalen Achse parallelen Linearachse translatorisch verfahren, um das Werkstück für die weitere Bearbeitung der Rückseite und eine nachfolgende Handhabung zugänglich zu machen. Auf diese Weise kann eine sechste Seite des Werkstücks bearbeitet werden.

Gemäß einer weiteren beispielhaften Ausgestaltung umfasst die Bearbeitung der zuvor nicht zugänglichen Rückseite des Werkstücks zur Erzeugung der gewünschten Kontur eine Schwenkbewegung der sekundären Werkstückhalteeinheit.

Gemäß einer weiteren beispielhaften Ausgestaltung schließt sich an die Bearbeitung der zuvor nicht zugänglichen Rückseite des Werkstücks ein Entladen an, wobei das Entladen eine Abgabe des bearbeiteten Werkstücks durch die sekundäre Werkstückhalteeinheit umfasst.

Das Entladen kann beispielsweise Schwerkraft unterstützt (definiertes Fallenlassen) erfolgen. Zu diesem Zweck können beispielhaft unterhalb der sekundären Werkstückhalteeinheit Ladehilfsmittel bereitgestellt werden. Das Entladen kann jedoch auch die Bereitstellung des Werkstücks für einen Greifer, beispielsweise einen Greifer eines Handhabungsroboters umfassen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Fertigungsanlage mit einer Werkzeugmaschine mit Gehäuse;
- Fig. 2:: eine auf Fig. 1 beruhende Teilansicht der Werkzeugmaschine unter Auslassung des Gehäuses;
- Fig. 3:: eine weitere perspektivische Ansicht der anhand der Figuren 1 und 2 veranschaulichten Werkzeugmaschine, mit geänderter Ansichtsorientierung;
- Fig. 4:: eine Längsansicht der Werkzeugmaschine gemäß den Figuren 1-3 in einer Teildarstellung;
- Fig. 5:: eine Queransicht der Werkzeugmaschine gemäß den Figuren 1-4 in einer Teildarstellung;
- Fig. 6:: eine weitere perspektivische Ansicht der Werkzeugmaschine gemäß den Figuren 1-5 zur Veranschaulichung einer Schwenkfunktion;
- Fig. 7:: eine vereinfachte schematische Ansicht durch eine als Hohlspindel gestaltete Drehspindel einer Werkzeugmaschine zur Veranschaulichung der Betätigung einer Spanneinheit der Drehspindel;
- Fig. 8:: eine schematische Längsansicht einer Werkzeugmaschine zur Veranschaulichung eines Teilabschnitts eines Bearbeitungsprozesses;
- Fig. 9:: eine auf Fig. 8 beruhende Ansicht zur Veranschaulichung eines weiteren Teilabschnitts des Bearbeitungsprozesses;
- Fig. 10:: eine auf den Figuren 8 und 9 beruhende Ansicht zur Veranschaulichung eines weiteren Teilabschnitts des Bearbeitungsprozesses;
- Fig. 11:: eine perspektivische Ansicht einer weiteren Ausgestaltung einer Werkzeugmaschine;
- Fig. 12:: eine Queransicht der Werkzeugmaschine gemäß Fig. 11 in einer Teildarstellung;
- Fig. 13:: eine perspektivische Ansicht einer weiteren Ausgestaltung einer Werkzeugmaschine in einer Teildarstellung;
- Fig. 14:: eine frontale Ansicht der Werkzeugmaschine gemäß Fig. 13; und
- Fig. 15:: ein schematisch stark vereinfachtes Blockdiagramm zur Veranschaulichung einer beispielhaften Ausführungsform eines Verfahrens zur Bearbeitung von Stangen material.

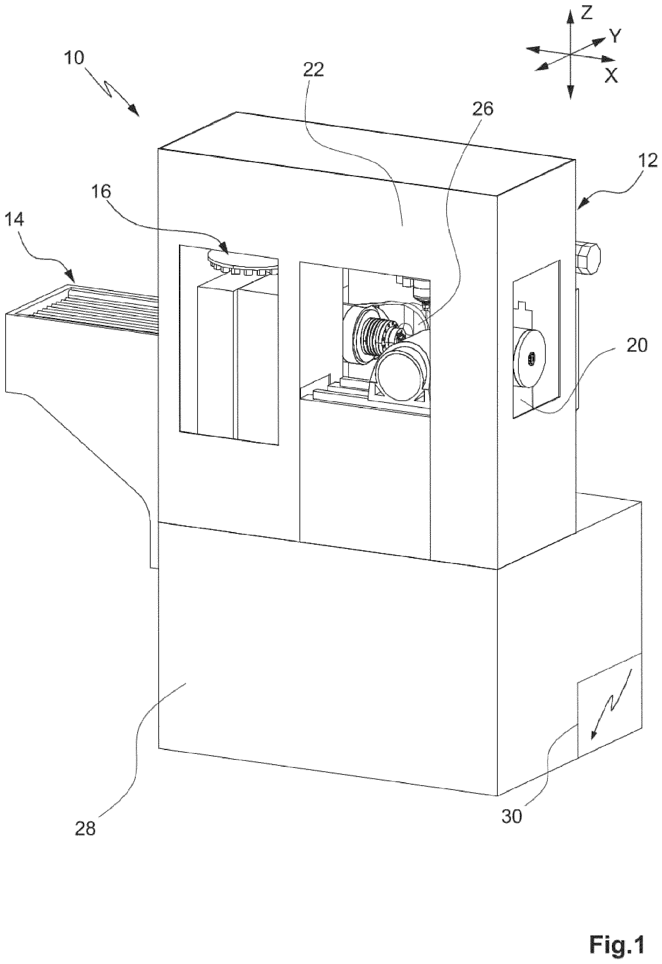

Fig. 1 veranschaulicht anhand einer perspektivischen Darstellung eine beispielhafte Ausgestaltung einer insgesamt mit 10 bezeichneten Fertigungsanlage, die eine Werkzeugmaschine 12 aufweist. Die Werkzeugmaschine 12 ist grundsätzlich als zur Fräsbearbeitung und zur Drehbearbeitung geeignete Maschine gestaltet. Auf diese Weise eignet sich die Werkzeugmaschine 12 zur Komplettbearbeitung. Die Fertigungsanlage 10 umfasst im Ausführungsbeispiel die Werkzeugmaschine 10 und ferner ein Stangenmagazin 14 und ein Werkzeugmagazin 16. Es versteht sich, dass entsprechende Handhabungstechnik zum Beladen und/oder zum Werkzeugwechsel vorgesehen sein kann. Auf diese Weise kann die Fertigungsanlage 10 zumindest zeitweise autonom betrieben werden. Das Beladen (üblicherweise mit Halbzeugen in Form von Stangen) und der Werkzeugwechsel können automatisiert oder teilautomatisiert vonstattengehen. Auch das Entladen kann automatisiert oder teilautomatisiert vonstattengehen.

In zumindest einigen der hierin gezeigten Figuren ist ein kartesisches Koordinatensystem mit Achsen X, Y, Z angedeutet. Die X-Achse kennzeichnet allgemein eine Längsrichtung oder Längserstreckung. Die Y-Achse kennzeichnet allgemein eine Querrichtung oder Quererstreckung. Die Z-Achse kennzeichnet allgemein eine Höhenrichtung oder Höhenerstreckung (vertikale Erstreckung). Die Achsen X und Y sind horizontale Achsen. Die Achsen X und Y bilden gemeinsam eine Horizontalebene. Die Achse Z ist eine vertikale Achse. Die Achse Z ist orthogonal zu den Achsen X und Y orientiert. Rotationen um die X-Achse sind allgemein einer rotatorischen A-Achse zugeordnet. Rotationen um die Y-Achse sind allgemein einer rotatorischen B-Achse zugeordnet. Rotationen um die Z-Achse sind allgemein einer rotatorischen C-Achse zugeordnet. Das Koordinatensystem X, Y, Z sowie die weiteren Drehachsen/Schwenkachsen A, B, C dienen nachfolgend insbesondere zur Veranschaulichung von Ausführungsbeispielen und Merkmalen und sind nicht einschränkend zu verstehen. Der Fachmann kann gegebenenfalls erforderliche Transformationen ohne weiteres vornehmen. Dies gilt insbesondere im Hinblick auf die Nomenklatur zu Bezeichnung der Achsen konventioneller Drehmaschinen und konventioneller Fräsmaschinen.

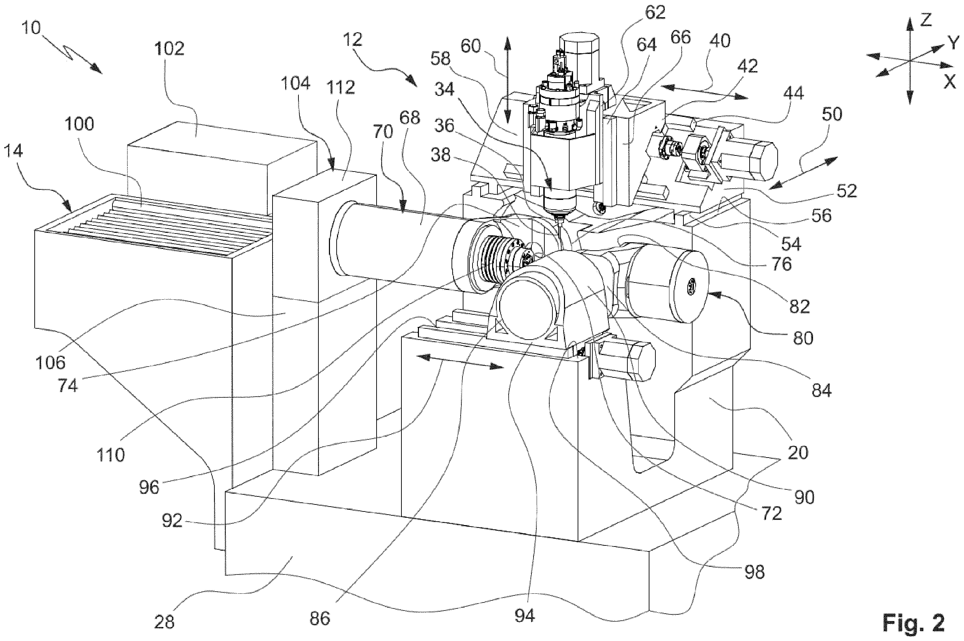

Die Werkzeugmaschine 12 umfasst ein Gestell 20, das im Ausführungsbeispiel gemäß Fig. 1 von einem Gehäuse 22 mit zumindest einer Zugangsöffnung umgeben ist. Fig. 2 zeigt eine vergrößerte Darstellung der Fertigungsanlage 10 in derselben perspektivischen Orientierung, wobei aus Veranschaulichungsgründen das Gehäuse 22 der Werkzeugmaschine 12 ausgeblendet ist. Das Gestell 20 der Werkzeugmaschine 12 trägt eine Kinematik, deren Freiheitsgrade und Verfahrwege einen Arbeitsraum 26 definieren, in dem Werkstücke bearbeitet werden können.

Im Ausführungsbeispiel ruht das Gestell 20 der Werkzeugmaschine 12 auf einem Unterbau 28. Dies ist vor allem deshalb möglich, weil die Werkzeugmaschine 12 hinreichend kompakt gestaltet ist. Daher können weitere Komponenten und Funktionsgruppen der Werkzeugmaschine 12 im Unterbau 28 angeordnet sein. Für einen stehenden Bediener ergibt sich gleichwohl aufgrund der erhöhten Anordnung des Gestells 20 und des Arbeitsraums 26 eine gute Übersicht und Zugänglichkeit.

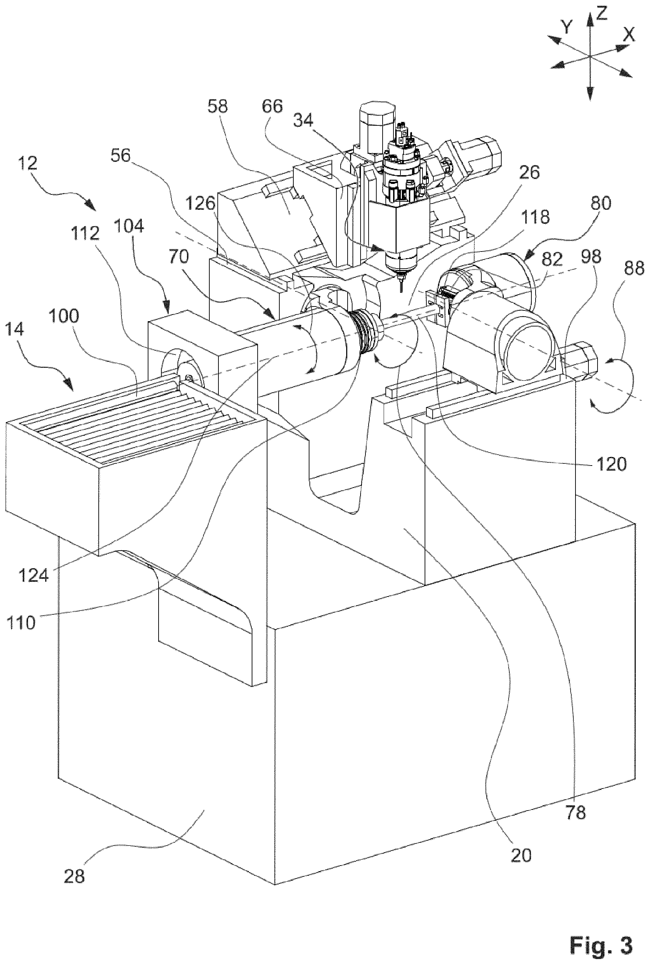

In den Figuren 1 und 2 ist jeweils eine perspektivische Ansicht gezeigt. Insgesamt zeigen die Figuren 1 und 2 sowie in Ergänzung Fig. 3 die Werkzeugmaschine 12 an ihrer Bedienerseite. Der Bediener steht beispielsweise in der Y-Richtung versetzt vor dem Arbeitsraum 26, um einen guten Überblick zu haben. Im Ausführungsbeispiel gemäß Fig. 1 ist das Stangenmagazin 14 seitlich an die Werkzeugmaschine 12 angekoppelt, um Stangenmaterial bereitzustellen und einwechseln zu können. In Fig. 1 ist ferner mit 30 eine Steuerung der Werkzeugmaschine 12 bzw. der Fertigungsanlage 10 angedeutet. Die Steuerung 30 ist üblicherweise als NC-Steuerung bzw. als CNC-Steuerung gestaltet. Die Steuerung 30 dient zur Steuerung von Komponenten der Werkzeugmaschine 12 sowie weitere Komponenten und Baugruppen der Fertigungsanlage 20 in der Peripherie der Werkzeugmaschine 12. Die Steuerung 30 steuert die Achsen und Freiheitsgrade der Werkzeugmaschine 12. Die Steuerung 30 ist in Fig. 1 lediglich symbolhaft dargestellt. Die Steuerung 30 kann in die Werkzeugmaschine 12 integriert sein. Es ist jedoch auch vorstellbar, Aufgaben der Steuerung 30 zumindest teilweise an externe Einheiten auszulagern, die mit der Werkzeugmaschine 12 bzw. der Fertigungsanlage 10 über Datenverbindungen gekoppelt sind. CNC-Steuerungen sind üblicherweise als speicherprogrammierbare Steuerung (SPS bzw. PLC) ausgeführt.

Mit Bezugnahme auf Fig. 2 sowie mit ergänzender Bezugnahme auf Fig. 3 wird die Struktur der Werkzeugmaschine 12 näher veranschaulicht. Am Gestell 20 der Werkzeugmaschine 12 ist eine Werkzeugspindel 34 gelagert. Die Werkzeugspindel 34 weist einen Werkzeughalter 36 auf, um ein im Werkzeughalter aufgenommenes Werkzeug 38 rotatorisch um eine vertikale Längsachse antreiben zu können. Auf diese Weise kann die Werkzeugspindel 34 mit angetriebenen Werkzeugen 38 bestückt sein. Dies ermöglicht Fräsbearbeitungen, Bohrbearbeitungen und Ähnliches. Es ist jedoch auch vorstellbar, den Werkzeughalter 36 der Werkzeugspindel 34 mit stehenden Werkzeugen 38 zu bestücken, etwa mit Drehwerkzeugen. Vorzugsweise ist die Werkzeugmaschine 12 für beide Anwendungen gleichermaßen geeignet.

Im Ausführungsbeispiel ist die Werkzeugspindel 34 als vertikal orientierte, hängende Spindel gestaltet. Die Werkzeugspindel 34 mit dem Werkzeug 38 ist relativ zum Gestell 20 in drei linearen Achsen translatorisch verfahrbar. Insbesondere ist die Werkzeugspindel 34 nicht um eine zur Y-Achse parallele Schwenkachse (B-Achse) schwenkbar.

Die Werkzeugspindel 34 ist entlang einer X-Achse translatorisch verfahrbar. Zu diesem Zweck ist ein X-Schlitten 42 vorgesehen, der an einer X-Führung 44 gelagert ist. Ferner ist ein geeigneter Antrieb verbaut. Die Werkzeugspindel 34 ist ferner entlang einer Y-Achse 50 translatorisch verfahrbar. Zu diesem Zweck ist ein Y-Schlitten 52 vorgesehen, der an einer Y-Führung 54 gelagert ist. Ferner ist ein geeigneter Antrieb verbaut. Die X-Achse 40 und die Y-Achse 50 sind horizontal und zueinander orthogonal orientiert. Die Werkzeugspindel 34 ist ferner entlang einer Z-Achse 60 translatorisch verfahrbar. Zu diesem Zweck ist ein Z-Schlitten 62 vorgesehen, der an einer Z-Führung 64 gelagert ist. Ferner ist ein geeigneter Antrieb verbaut.

Die Y-Führung 54 ist im Ausführungsbeispiel an einem Flachbett 56 des Gestells 20 der Werkzeugmaschine 12 ausgebildet. Über die Y-Führung 54 ist der Y-Schlitten 52 am Gestell 20 gelagert. Der Y-Schlitten 52 weist ein Schrägbett 58 auf, das gegenüber Y-Achse und gegenüber der Z-Achse geneigt ist. Am Schrägbett 58 ist die X-Führung 44 für den X-Schlitten 42 angeordnet. Der X-Schlitten 42 ist am Y-Schlitten 52 gelagert. Der X-Schlitten 42 weist eine Stirnwand 66 auf, die im Ausführungsbeispiel eine im Wesentlichen vertikale Erstreckung (parallel zur X-Z-Ebene) aufweist. An der Stirnwand 66 ist die Z-Führung 64 für den Z-Schlitten 62 angeordnet. Mit anderen Worten ergibt sich aus Sicht des Gestells 20 in Richtung auf die Werkzeugspindel 34 eine bestimmte Reihenfolge der Achsen. Aus Sicht des Gestells 20 ist die kinematisch nächstliegende Achse die Y-Achse 50, hierauf folgt die X-Achse 40, hierauf folgt die Z-Achse 60. Mit anderen Worten ist der Z-Schlitten 62 am X-Schlitten 42 gelagert, wobei der X-Schlitten 42 am Y-Schlitten 52 gelagert ist, und wobei der Y-Schlitten 52 wiederum am Gestell 20 gelagert ist.

Die Werkzeugmaschine 12 weist ferner eine Drehspindel 68 auf, die Bestandteil einer primären Werkstückhalteeinheit 70 ist. Die primäre Werkstückhalteeinheit 70 ist am Gestell 20 gelagert. Die primäre Werkstückhalteeinheit 70 weist einen primären Werkstückhalter 72 auf, der zum Halten und Fixieren eines Werkstücks dient, das üblicherweise als Stangenmaterial vorliegt. Die primäre Werkstückhalteeinheit 70 weist folglich die Funktionalität einer Drehspindel 68 auf. Die primäre Werkstückhalteeinheit 70 ist über einen Schwenkträger 74 schwenkbar am Gestell 20 der Werkzeugmaschine 12 gelagert. Zu diesem Zweck ist ein Schwenklager 76 vorgesehen, das die Schwenkbewegung des Schwenkträgers 74 ermöglicht. In Fig. 3 ist die sich ergebende Schwenkachse durch einen mit 78 bezeichneten gekrümmten Doppelpfeil bezeichnet. Die Schwenkachse 78 kann auch als B1-Achse (parallel zu Y-Achse) bezeichnet werden.

Die Werkzeugmaschine 12 weist ferner eine sekundäre Werkstückhalteeinheit 80 auf, die am Gestell 20 gelagert ist. Die sekundäre Werkstückhalteeinheit 80 ist beispielsweise als Greifer, Drehtisch und/oder als Gegenspindel gestaltet. Die primäre Werkstückhalteeinheit 70 und die sekundäre Werkstückhalteeinheit 80 sind in den Figuren 2 und 3 koaxial zueinander, einander gegenüberliegend und einander zugewandt angeordnet. Auf diese Weise können die Werkstückhalteeinheiten 70, 80 zumindest zeitweise Werkstücke gleichzeitig greifen.

Die sekundäre Werkstückhalteeinheit 80 weist einen sekundären Werkstückhalter 82 auf. Die sekundäre Werkstückhalteeinheit 80 ist über einen Schwenkträger 84 schwenkbar am Gestell 20 der Werkzeugmaschine 12 gelagert. Zu diesem Zweck ist ein Schwenklager 86 vorgesehen, das die Schwenkbewegung des Schwenkträgers 84 ermöglicht. In Fig. 3 ist die sich ergebende Schwenkachse durch einen mit 88 bezeichneten gekrümmten Doppelpfeil bezeichnet. Die Schwenkachse 88 kann auch als B2-Achse (parallel zu Y-Achse) bezeichnet werden.

Die sekundäre Werkstückhalteeinheit 80 ist relativ zum Gestell 20 um die Schwenkachse 88 schwenkbar. Das Schwenklager 86 ist zwischen dem Schwenkträger 84 und einem Schwenkgehäuse 90 ausgebildet. Die sekundäre Werkstückhalteeinheit 80 ist ferner entlang einer X2-Achse 92 in der X-Richtung translatorisch entlang des Gestells 20 verfahrbar. Das Schwenkgehäuse 90 sitzt auf einem X-Schlitten 94, der entlang einer X-Führung 96 translatorisch verfahrbar ist. Auf diese Weise kann ein X-Abstand zwischen den beiden Schwenkachsen 78, 88 verändert werden, indem die sekundäre Werkstückhalteeinheit 80 relativ zur primären Werkstückhalteeinheit 70 linear verfahren wird. Diese Bewegung kann zur Bearbeitungszwecken genutzt werden. Die Bewegung kann jedoch auch genutzt werden, um im Rahmen der Werkstückhandhabung Werkstücke und/oder Halbzeuge translatorisch zu bewegen. Die beiden Schwenkträger 74, 84 sind fliegend am Gestell 20 gelagert. Die Schwenkträger 74, 84 sind also nicht beidseitig abgestützt.

Im Ausführungsbeispiel gemäß Fig. 2 sitzt die X-Führung 96 auf einem Flachbett 98, das am Gestell 20 ausgebildet ist. Die X-Führung 26 für die sekundäre Werkstückhalteeinheit 80 sitzt an einer Oberseite des Gestells 20. Ferner sitzt die Y-Führung 54 für die Werkzeugspindel 34 an einer Oberseite des Gestells 20. Die primäre Werkstückhalteeinheit 70 ist relativ zum Gestell 20 um die Schwenkachse 78 (B1-Achse) verschwenkbar. Die sekundäre Werkstückhalteeinheit 80 ist relativ zum Gestell 20 um die Schwenkachse 88 (B2-Achse) verschwenkbar und entlang der linearen X2-Achse 92 translatorisch verfahrbar. Die X2-Achse 92 ist horizontal orientiert und mit einem entsprechenden Antrieb gekoppelt.

In den Figuren 2 und 3 ist ferner das Stangenmagazin 14 angedeutet. Das Stangenmagazin 14 dient zur Bereitstellung von Halbzeugen 100. Beispielsweise handelt es sich bei den Halbzeugen 100 um Kurzstangen. Beispielsweise weisen die Halbzeug 100 eine Länge von maximal 600 mm oder maximal 500 mm auf. Dem Stangenmagazin 14 ist ferner ein in Fig. 2 lediglich symbolhaft dargestellter Lademechanismus 102 zugeordnet. Der Lademechanismus 102 dient dazu, Halbzeuge 100 in den Arbeitsraum 26 der Werkzeugmaschine 12 einzubringen. Dies kann erfolgen, indem ein bereitgestelltes Halbzeug 100 an der vom primären Werkstückhalter 72 abgewandten Seite in die Drehspindel 68 eingeschoben wird. Wenn die Drehspindel 68 als Hohlspindel gestaltet ist, kann das Halbzeug 100 durch die Drehspindel 68 hindurchgeschoben werden, um am gegenüberliegenden Ende beim primären Werkstückhalter 72 im Arbeitsraum 26 hervor zu treten. Dies ist bei der in den Figuren 2 und 3 gezeigten horizontalen Orientierung der primären Werkstückhalteeinheit 70 ermöglicht.

Zwischen dem Stangenmagazin 14 und dem Arbeitsraum 26 ist im Ausführungsbeispiel gemäß den Figuren 2 und 3 eine Durchführung 104 angeordnet, die an/in einer Wand 106 ausgebildet ist. Die Wand 106 erstreckt sich im Ausführungsbeispiel ausgehend vom Unterbau 28 vertikal nach oben. Die Durchführung 104 erlaubt eine Durchführung von Halbzeugen 100 vom Stangenmagazin 14 hin zur Drehspindel 68 zum Beladen der Werkzeugmaschine 12.

Die primäre Werkstückhalteeinheit 70 weist eine Spanneinheit 110 zum Halten und Fixieren von Werkstücken auf. Die Drehspindel 68 erlaubt sodann einen Antrieb und/oder eine Positionierung der Werkstücke durch Drehbewegungen um eine Längsachse der Drehspindel 68. Die Durchführung 104 umfasst im Ausführungsbeispiel eine Betätigungseinheit 112, die dazu ausgebildet ist, die Spanneinheit 110 der primären Werkstückhalteeinheit 70 extern zu betätigen. Dies ist beispielsweise nur in der in den Figuren 2 und 3 gezeigten horizontalen Orientierung der Werkstückhalteeinheit 70 ermöglicht. Mit anderen Worten kann die Spanneinheit 110 nicht notwendigerweise in einer anderen Schwenkorientierung der Werkstückhalteeinheit 70 betätigt werden. Die externe Betätigung der Spanneinheit 110 durch die Betätigungseinheit 112 hat den Vorteil, dass die Werkstückhalteeinheit 70 mit dem primären Werkstückhalter 72 kompakt gestaltet sein kann.

Ein Beladen des Arbeitsraums 26 erfordert beispielsweise eine gemeinsame Ansteuerung des Lademechanismus 102 sowie der Betätigungseinheit 104 durch die Steuerung 30 (Fig. 1), wenn sich die primäre Werkstückhalteeinheit 70 in der horizontalen Orientierung befindet. Sofern auch die sekundäre Werkstückhalteeinheit 80 beteiligt ist, etwa um ein stangenartiges Halbzeug in der X-Richtung stückweise aus der primären Werkstückhalteeinheit 70 herauszuziehen, wird auf diese Baugruppe entsprechend durch die Steuerung 30 angesteuert. Dies erfordert fallweise ebenso eine horizontale Orientierung der sekundären Werkstückhalteeinheit 80.

In Fig. 3 ist der sekundäre Werkstückhalter 82 der sekundären Werkstückhalteeinheit 80 sichtbar, der im Ausführungsbeispiel mit einer Spanneinheit 118 versehen ist. Auf diese Weise können Werkstücke 120 gegriffen und gehalten werden. In der in Fig. 3 gezeigten horizontalen, koaxialen Orientierung der primären Werkstückhalteeinheit 70 und der sekundären Werkstückhalteeinheit 80 ergibt sich eine gemeinsame Längsachse 124. Die Drehspindel 68 erlaubt eine Rotation des Werkstücks 120 um die Längsachse 124, vergleiche einen mit 126 bezeichneten gekrümmten Doppelpfeil (auch bezeichnet als A-Achse). Bei der in Fig. 3 gezeigten Konfiguration ist eine Drehbearbeitung des Werkstücks 120 mit stehendem Werkzeug in der Werkzeugspindel 34 ermöglicht. Auch eine Fräsbearbeitung mit angetriebenem Werkzeug in der Werkzeugspindel 34 ist vorstellbar.

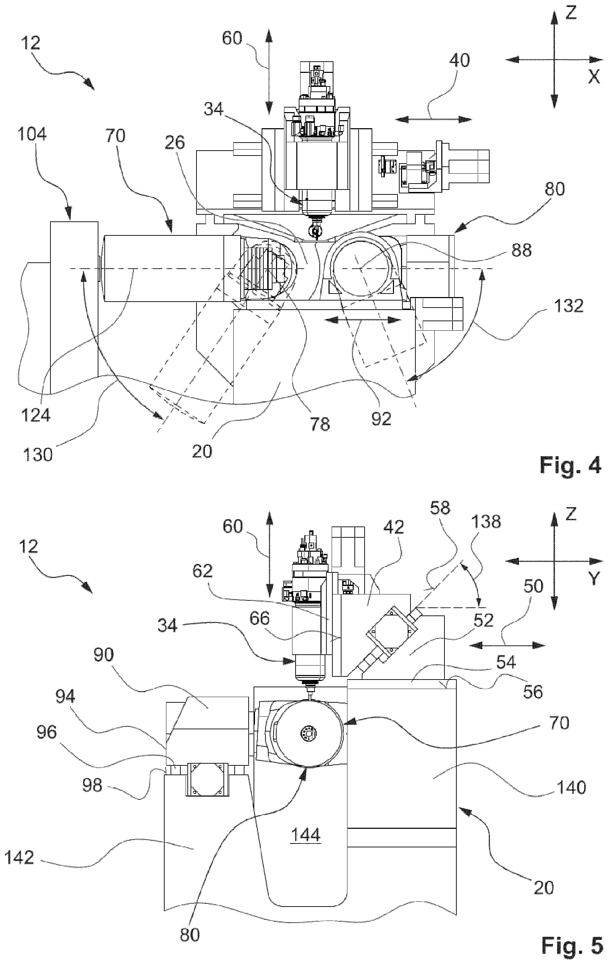

Die Figuren 4-6 veranschaulichen die Verschwenkbarkeit der primären Werkstückhalteeinheit 80 (um die Schwenkachse 78) und der sekundären Werkstückhalteeinheit 80 (um die Schwenkachse 88). In Fig. 4 sind verschwenkte Positionen der primären Werkstückhalteeinheit 70 und der sekundären Werkstückhalteeinheit 80 durch gestrichelte Linien angedeutet. Schwenkwinkel 130, 132 veranschaulichen das Maß der Schwenkbewegung ausgehend von der horizontalen Orientierung, vergleiche die horizontale Schwenkachse 124 (parallel zur X-Achse). Bei der Ansichtsorientierung gemäß Fig. 4, wobei der Bediener von der der Werkzeugspindel 34 gegenüberliegenden Seite auf den Arbeitsraum 26 blickt, wird die sekundäre Werkstückhalteeinheit 80 ausgehend von ihrer horizontalen Orientierung im Uhrzeigersinn verschwenkt. Dagegen wird die primäre Werkstückhalteeinheit 70 ausgehend von ihrer horizontalen Orientierung im Gegenuhrzeigersinn verschwenkt. Dies hat den Vorteil, dass beide Werkstückhalteeinheiten 70, 80 frei zwischen einer horizontalen und einer vertikalen Orientierung verschwenkt werden können, ohne dass Kollisionen drohen. Auch eine zeitparallele Schwenkbewegung beider Werkstückhalteeinheiten 70, 80 ist daher möglich.

Der jeweilige maximale Schwenkbereich (vergleiche die Schwenkwinkel 130, 132) umfasst beispielsweise zumindest die horizontale und die vertikale Orientierung, was zu einem Schwenkwinkel von betragsmäßig 90° (Winkelgrad) führt. Beispielsweise erlaubt der maximale Schwenkbereich dann jeweils Schwenkbewegungen von 10° über die horizontale Orientierung und die vertikale Orientierung hinaus, wodurch sich insgesamt ein maximaler Schwenkwinkel von betragsmäßig 110° (10°+90°+10°) ergibt. Dies ist nicht einschränkend zu verstehen. Bei einem Werkstück, das in der primären Werkstückhalteeinheit 70 aufgenommen ist, ist eine Bearbeitung in fünf Achsen ermöglicht. Sofern auch die sekundäre Werkstückhalteeinheit 80 neben der Schwenkachse 88 eine Drehachse bereitstellt, ist auch dort eine Bearbeitung in fünf Achsen ermöglicht.

Fig. 5 zeigt eine Queransicht der Werkzeugmaschine 12, die Ansichtsebene ist senkrecht zur X-Richtung. Die Gestaltung des Y-Schlittens 52 mit dem Schrägbett 58 resultiert in einer Neigung 138 gegenüber der Horizontalen (Y-Richtung). Das Schrägbett 58 erlaubt eine günstige und hochsteife Lagerung des X-Schlittens 42 und des Z-Schlittens 62, an dem die Werkzeugspindel 34 festgelegt ist.

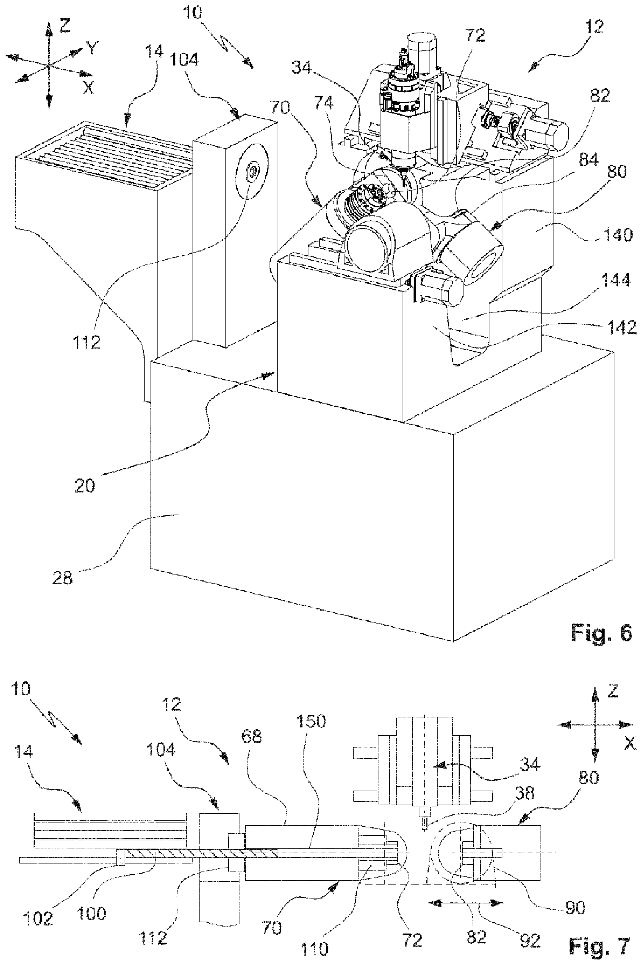

Das Gestell 20 der Werkzeugmaschine 12 weist einen primären Gestellabschnitt 140 und einen sekundären Gestellabschnitt 142 auf. An einer Oberseite (abgewandt vom Unterbau 28 (vergleiche auch Fig. 6) des primären Gestellabschnitts 140 ist die Y-Führung 54 angeordnet. An einer Oberseite des sekundären Gestellabschnitts 142 ist die X-Führung 96 für das Schwenkgehäuse 90 der sekundären Werkstückhalteeinheit 80 angeordnet. Beispielsweise sitzt die Y-Führung 96 auf dem Flachbett 98. Beispielsweise sitzt die Y-Führung 54 auf dem Flachbett 56.

Hinsichtlich der Höhenerstreckung (Z-Achse Streckung) gilt, dass der sekundäre Gestellabschnitt 142 niedriger als der primäre Gestellabschnitt 140 gestaltet ist. Wenn jedoch das Schwenkgehäuse 90 der sekundären Werkstückhalteeinheit 80 an der X-Führung 96 des sekundären Gestellabschnitt 142 gelagert ist, ergibt sich insgesamt eine Höhenerstreckung, die angenähert der Höhenerstreckung des primären Gestellabschnitts 140 entspricht. Damit wird der vorhandene Bauraum günstig genutzt. Aus den Figuren 5 und 6 ist ersichtlich, dass die primäre Werkstückhalteeinheit 70 am primären Gestellabschnitt 140 und die sekundäre Werkstückhalteeinheit 80 am sekundären Gestellabschnitt 142 gelagert ist.

Zwischen dem primären Gestellabschnitt 140 und dem sekundären Gestellabschnitt 142 ist eine Aussparung 144 im Gestell 20 vorgesehen. Zwischen dem primären Gestellabschnitt 140 und dem sekundären Gestellabschnitt 142 erstreckt sich eine Gestellbasis. Die Aussparung 144 erlaubt ein Eintauchen der primären Werkstückhalteeinheit 70 und der sekundären Werkstückhalteeinheit 80 beim Verschwenken, vergleiche auch die perspektivische Darstellung in Fig. 6. Im Ausführungsbeispiel ist die Aussparung zu drei Seiten geöffnet (zwei seitliche Seiten und nach oben). Der von der Werkzeugmaschine 12 beanspruchte Bauraum wird günstig genutzt. Werkstücke können im Rahmen einer Komplettbearbeitung mittels Drehen und Fräsen komplett an sechs Seiten bearbeitet werden. Die beiden Schwenkträger 74, 84 sind zumindest teilweise innerhalb der Aussparung 114 angeordnet. Der Schwenkträger 74 ist fliegend am primären Gestellabschnitt 140 gelagert. Der Schwenkträger 84 ist fliegend am sekundären Gestellabschnitt 142 gelagert.

In beispielhaften Ausgestaltungen sind die Schwenkträger 74, 84 der primären Werkstückhalteeinheit 70 und der sekundären Werkstückhalteeinheit 80 als Gleichteile gestaltet. In einer beispielhaften Ausgestaltung sind ferner auch die Schwenklager 76, 86 der primären Werkstückhalteeinheit 70 und der sekundären Werkstückhalteeinheit 80 als Gleichteile gestaltet. Dies führt zu einer geringeren Teilevielfalt und vereinfacht Montage, Wartung und Reparatur. Fig. 6 zeigt ferner die externe Betätigungseinheit 112, die in der gegebenen Schwenkorientierung nicht von der primären Werkstückhalteeinheit 70 verdeckt ist.

Mit Bezugnahme auf die Figuren 7-10 wird anhand schematischer Ansichten ein beispielhafter Beladevorgang mit einer folgenden Bearbeitung zur Erzeugung eines Werkstücks veranschaulicht. Die Ansichtsorientierung in den Figuren 7-10 entspricht etwa derjenigen von Fig. 4.

In Fig. 7 ist ein Zustand gezeigt, in dem die primäre und die sekundäre Werkstückhalteeinheit 70, 80 jeweils in der horizontalen Orientierung sind. Wenn zumindest die primäre Werkstückhalteeinheit 70 horizontal orientiert ist, kann ein stangenförmiges Halbzeug 100 mit dem Lademechanismus 102 durch die Durchführung 104 hindurch in die als Hohlspindel 150 gestaltete Drehspindel 68 eingeführt werden. Bei dem Halbzeug 100 handelt es sich beispielhaft um eine Kurzstange mit einer Länge von 500 mm. Das Halbzeug 100 kann an der Rückseite der Drehspindel 68, an der keine Bearbeitung erfolgt, in die Drehspindel 68 eingeführt und durch diese hindurch geführt werden.

Zum Spannen des Halbzeugs 100 ist die Spanneinheit 110 vorgesehen, die im Ausführungsbeispiel durch die externe Betätigungseinheit 112 betätigt werden kann. Bei der Spanneinheit 110 handelt es sich beispielsweise um eine mittels Federkraft betätigte Spanneinheit 110, die das Halbzeug 100 selbsttätig halten und fixieren kann. Wenn sich die primäre Werkstückhalteeinheit 70 in der horizontalen Orientierung befindet, kann die Betätigungseinheit 112 auf die Spanneinheit 110 einwirken, beispielsweise um diese zu entlasten (zu öffnen). Auf diese Weise kann das Halbzeug 100 eingeführt oder um einen bestimmten Betrag vorgerückt werden, wenn auf Basis eines Halbzeugs 100 mehrere Werkstücke erzeugt werden sollen.

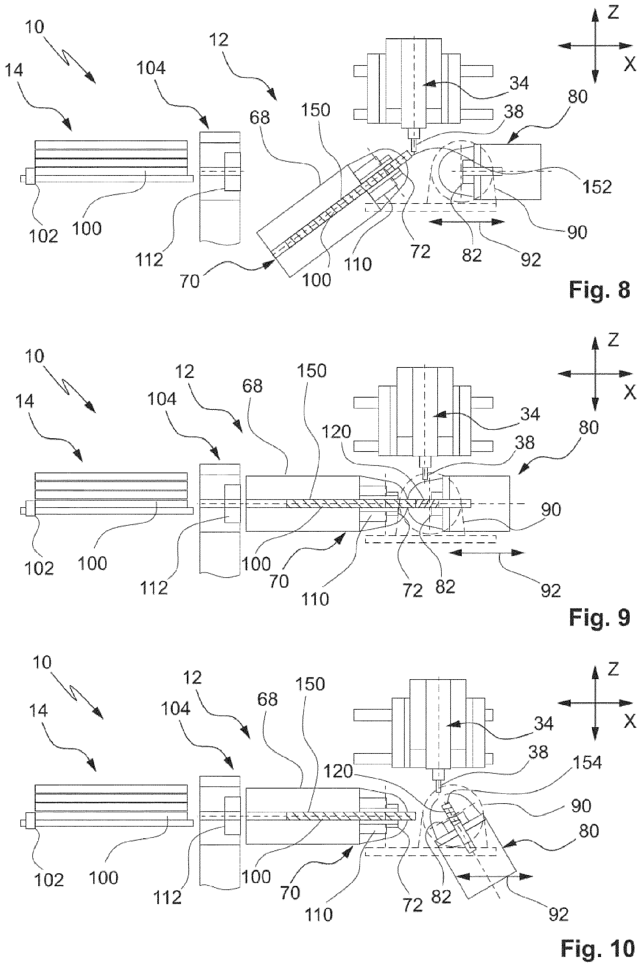

Fig. 8 veranschaulicht eine Mehrachsbearbeitung, bei der die primäre Werkstückhalteeinheit 70 verschwenkt wird, um an deren primären Werkstückhalter 72 eine Vorderseite 152 des Halbzeugs 100 für das Werkzeug 38 der Werkzeugspindel 34 zugänglich zu machen. Die Bearbeitung kann eine Drehbearbeitung und/oder eine Fräsbearbeitung umfassen. Bei der in Fig. 8 gezeigten Bearbeitung ist die sekundäre Werkstückhalteeinheit 80 noch nicht im Eingriff mit dem Halbzeug 100, dies ist nicht einschränkend zu verstehen.

Fig. 9 veranschaulicht einen Zustand, bei dem die primäre Werkstückhalteeinheit 70 (beispielsweise nach der in Fig. 8 veranschaulichten Bearbeitung) wieder in die horizontale Orientierung verbracht wurde. Auf Basis des Halbzeugs 100 wurde ein Werkstück 120 erzeugt. Das Werkstück 120 ist aber noch nicht vom Halbzeug 100 getrennt. Die sekundäre Werkstückhalteeinheit 80 kann nun ebenso in der horizontalen Orientierung durch Bewegung entlang der X2-Achse herangeführt werden, um das Werkstück 120 mit dem sekundären Werkstückhalter 82 zugreifen. In der in Fig. 9 gezeigten Orientierung ist beispielsweise eine Drehbearbeitung oder Fräsbearbeitung bei beidseitig eingespannten Halbzeug 100 vorstellbar. Der in Fig. 9 gezeigte Zustand kann jedoch auch genutzt werden, um das Werkstück 120 vom Halbzeug 100 zu trennen. Auch dies kann mit einem geeigneten Werkzeug 38 der Werkzeugspindel 34 erfolgen.

Fig. 10 veranschaulicht einen Zustand, in dem das Werkstück 120 vom verbliebenen Halbzeug 100 getrennt wurde. Das Halbzeug 100 verbleibt in der primären Werkstückhalteeinheit 70, dort kann ein neues Werkstück erzeugt werden. Ferner kann das nunmehr vom sekundären Werkstückhalter 82 gehaltenen Werkstück 120 an seiner zuvor nicht zugänglichen Seite bearbeitet werden. Dies erlaubt eine Komplettbearbeitung. Auf diese Weise kann das Halbzeug 100 Stück für Stück bearbeitet werden, um eine Mehrzahl von Werkstücken 120 zu erzeugen. Nach der Bearbeitung kann das Werkstück 120 in geeigneter Weise von der sekundären Werkstückhalteeinheit 80 abgegeben werden. Dies kann Schwerkraft unterstützt erfolgen oder eine definierte Übergabe an Handhabungstechnik umfassen.

Der translatorische Freiheitsgrad (vergleiche die X2-Achse 92) der sekundären Werkstückhalteeinheit 80 kann auch für den Stangenvorschub genutzt werden. Dies umfasst beispielhaft eine Betätigung der internen Spanneinheit 110 der primären Werkstückhalteeinheit 70 durch die externe Betätigungseinheit 112. Auf diese Weise kann ein neuer Abschnitt des Halbzeugs 100 für eine spätere Bearbeitung zugänglich gemacht werden. Dies ist grundsätzlich in der in Fig. 9 gezeigten Orientierung vorstellbar. Wenn also ein Werkstück 120 von der sekundären Werkstückhalteeinheit 80 abgegeben wurde, kann die sekundäre Werkstückhalteeinheit 80 das nunmehrige freie Ende des Halbzeugs 100 beim primären Werkstückhalter 72 greifen und aus der primären Werkstückhalteeinheit 80 herausziehen, wenn die Spanneinheit 110 entsprechend betätigt wurde. Alternativ kann in dem in Fig. 9 gezeigten Zustand die sekundäre Werkstückhalteeinheit 80 durch Bewegung entlang der X2-Achse das Werkstück 120 und das Halbzeug 100 bereits vor dem Trennen des Werkstücks 120 entlang der X2-Achse aus der primären Werkstückhalteeinheit 70 herauszuziehen, um genügend Material für ein neues Werkstück zugänglich zu machen.

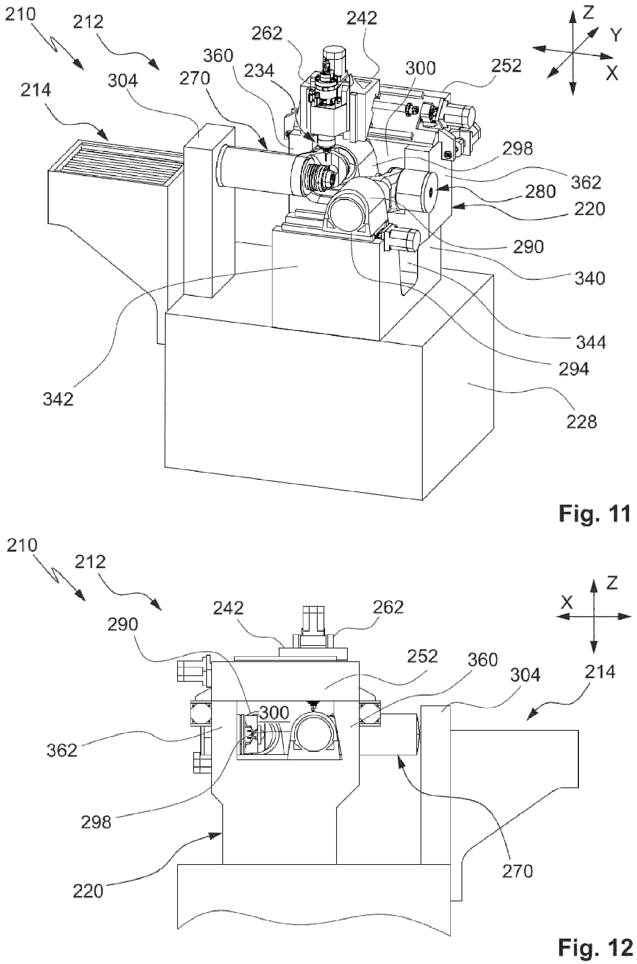

Mit Bezugnahme auf die Figuren 11 und 12 wird eine beispielhafte Ausgestaltung einer Fertigungsanlage veranschaulicht, die insgesamt mit 210 bezeichnet ist. Die Fertigungsanlage 210 ist der bereits anhand der Figuren 1-10 veranschaulichten Fertigungsanlage 10 grundsätzlich ähnlich gestaltet. Nachfolgend wird daher in erster Linie auf Unterschiede eingegangen. Hinsichtlich der übrigen Detailgestaltung wird auf die voranstehenden Erläuterungen verwiesen.

Die Fertigungsanlage 210 umfasst eine Werkzeugmaschine 212, der ein Stangenmagazin 214 zugeordnet ist. Die Werkzeugmaschine 212 umfasst ein Gestell 220, das auf einem Unterbau 228 ruht. Die Werkzeugmaschine 212 umfasst eine Kinematik, die grundsätzlich derjenigen der Werkzeugmaschine 12 entspricht. Auf diese Weise kann eine Werkzeugspindel 234 in drei translatorischen Achsen (X, Y, Z) relativ zum Gestell 220 bewegt werden, um Werkstücke zu bearbeiten. Die Werkzeugspindel 234 ist nicht schwenkbar, insbesondere ist keine B-Achse (Schwenkbewegungen um die Y-Achse) für die Werkzeugspindel 234 vorgesehen.

Für die translatorische Bewegung der Werkzeugspindel 234 sind ein X-Schlitten 242, ein Y-Schlitten 252 und ein Z-Schlitten 262 vorgesehen. Der Y-Schlitten 252 ist am Gestell 220 gelagert und relativ zu diesem in der Y-Richtung verfahrbar. Der X-Schlitten 242 ist am Y-Schlitten 252 gelagert und relativ zu diesem in der X-Richtung verfahrbar. Der Z-Schlitten ist am X-Schlitten 242 gelagert und relativ zu diesem in der Z-Richtung verfahrbar. Die Werkzeugspindel 234 ist am Z-Schlitten 262 gelagert und gemeinsam mit diesem verfahrbar.

Die Werkzeugmaschine umfasst ferner eine primäre Werkstückhalteeinheit 270 und eine sekundäre Werkstückhalteeinheit 280, die jeweils um eine Schwenkachse parallel zur Y-Achse verschwenkbar sind. Zusätzlich ist die sekundäre Werkstückhalteeinheit 280 in einem Schwenkgehäuse 290 gelagert, das über einen X-Schlitten 294 am Gestell 220 gelagert und relativ zu diesem in der X-Richtung verfahrbar ist. Im Ausführungsbeispiel gemäß den Figuren 11 und 12 ist auch die primäre Werkstückhalteeinheit 270 in einem Schwenkgehäuse 298 schwenkbar gelagert. In einer beispielhaften Ausgestaltung sind das Schwenkgehäuse 290 für die sekundäre Werkstückhalteeinheit 280 und das Schwenkgehäuse 298 für die primäre Werkstückhalteeinheit 270 als Gleichteile gestaltet.

Insbesondere die rückwärtige Ansicht gemäß Fig. 12 verdeutlicht, dass das Schwenkgehäuse 298 für die primäre Werkstückhalteeinheit 270 im Ausführungsbeispiel in einer Gestellöffnung 300 angeordnet ist. Auf diese Weise können die Schwenkgehäuse 290, 298 als Gleichteile gestaltet sein. Zwischen dem Stangenmagazin 214 und der primären Werkstückhalteeinheit 270 ist eine Durchführung 304 angeordnet, durch die die Werkzeugmaschine 212 mit die Stangenmaterial beladen werden kann.

Ähnlich wie das Gestell 20 der Werkzeugmaschine 12 weist auch das Gestell 220 der Werkzeugmaschine 212 eine Aussparung 344 auf, die zwischen einem primären Gestellabschnitt 340 und einem sekundären Gestellabschnitt 342 ausgebildet ist und das Gestell 220 in der X-Richtung durchdringt. Die Aussparung 344 stellt Bauraum für die zuvor schon beschriebene Schwenkbewegung der primären Werkstückhalteeinheit 270 und der sekundären Werkstückhalteeinheit 280 bereit. Der X-Schlitten 294 der sekundären Werkstückhalteeinheit 280 ist am sekundären Gestellabschnitt 342 in der X-Richtung verschieblich gelagert. Der Y-Schlitten 252 der Werkzeugspindel 234 ist am primären Gestellabschnitt 340 in der Y-Richtung verschieblich gelagert.

Die Gestellöffnung 300 erstreckt sich im Ausführungsbeispiel in der Y-Richtung durch den primären Gestellabschnitt 340 hindurch. Auf diese Weise sind am Gestell 220 zwei Wangen 360, 362 ausgebildet, zwischen denen die Gestellöffnung 300 angeordnet ist. Die beiden Wangen 360, 362 sind in der X-Richtung relativ zueinander versetzt. Die beiden Wangen definieren einen Führungsabstand für die Führung des Y-Schlittens 252 in der Y-Richtung. Die rückwärtige Ansicht gemäß Fig. 12 zeigt, dass die Gestellöffnung 300 zum einen zur Aufnahme des Schwenkgehäuses 298 nutzbar ist, dass zum anderen aber auch eine Nutzung für andere Zwecke denkbar ist. Hierbei kann es sich beispielhaft um Transferzwecke handeln, etwa für Transferzwecke zum Entladen bearbeiteter Werkstücke und/oder zum Werkzeugwechsel. Dies ist nicht einschränkend zu verstehen.

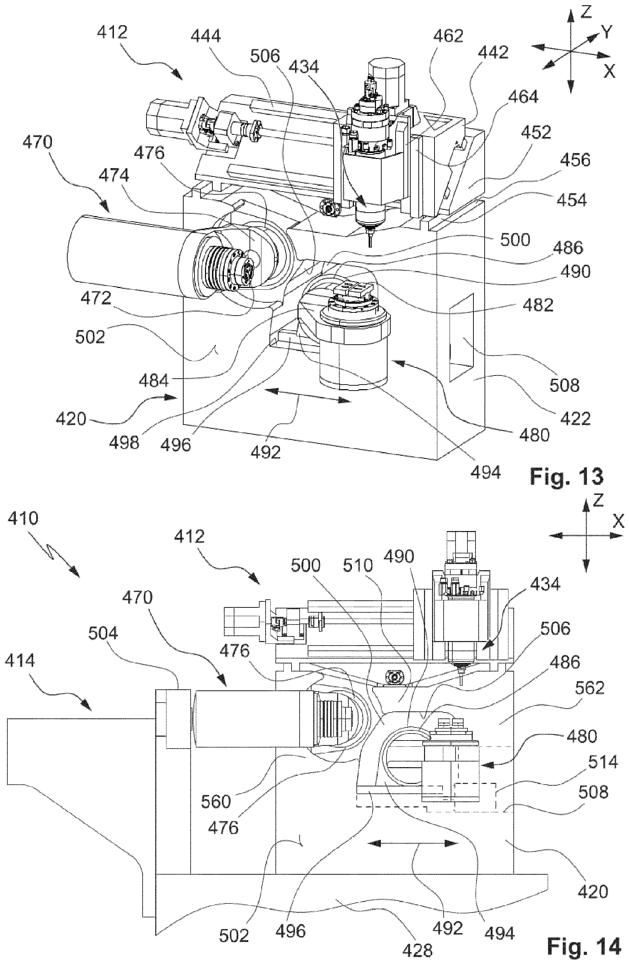

Mit Bezugnahme auf die Figuren 13 und 14 wird eine beispielhafte Ausgestaltung einer Fertigungsanlage 410 mit einer Werkzeugmaschine 412 veranschaulicht. Die Fertigungsanlage 410 ist den bereits anhand der Figuren 1-12 veranschaulichten Fertigungsanlagen 10, 210 grundsätzlich ähnlich gestaltet. Nachfolgend wird daher in erster Linie auf Unterschiede eingegangen. Hinsichtlich der übrigen Detailgestaltung wird auf die voranstehenden Erläuterungen verwiesen.

Die Fertigungsanlage 410 (vergleiche Fig. 14) umfasst eine Werkzeugmaschine 412 sowie ein Stangenmagazin 414 zur Bereitstellung von Werkstücken, vergleiche auch die Durchführung 504 zwischen dem Stangenmagazin 414 und der Werkzeugmaschine 412. Ein Beladen mit Werkstücken ist daher analog zu den schon beschriebenen Gestaltungen ermöglicht.

Die Werkzeugmaschine 412 ruht auf einem Gestell 420. In Fig. 14 ist angedeutet, dass das Gestell 420 auf einem Unterbau 428 ruht. Im Ausführungsbeispiel ist das Gestell 420 als Ständer 422 gestaltet. Die Werkzeugmaschine 412 umfasst eine Werkzeugspindel 434, deren Kinematik im Ausführungsbeispiel derjenigen der Werkzeugspindeln 34, 234 entspricht.

Die Werkzeugspindel 434 ist in drei translatorischen Achsen (X, Y, Z) verfahrbar. Für die X-Bewegung ist ein X-Schlitten 442 vorgesehen, der entlang einer X-Führung 444 verfahrbar ist. Für die Y-Bewegung ist ein Y-Schlitten 452 vorgesehen, der entlang einer Y-Führung 454 verfahrbar ist. Für die Z bin Bewegung ist ein Z-Schlitten 462 vorgesehen, der entlang einer Z-Führung 464 verfahrbar ist. Die Y-Führung 454 ist an einem Flachbett 456 des Gestells 420 ausgebildet. Die X-Führung 444 ist am Y-Schlitten 452 ausgebildet, beispielsweise an einem Schrägbett des Y-Schlittens 452. die Z-Führung 464 ist am Y-Schlitten 442 ausgebildet, beispielsweise an einer Stirnwand des Y-Schlittens 442.

Die Werkzeugmaschine 412 umfasst eine primäre Werkstückhalteeinheit 470 und eine sekundäre Werkstückhalteeinheit 480, die jeweils um eine Schwenkachse parallel zur Y-Richtung schwenkbar sind. Die primäre Werkstückhalteeinheit 470 umfasst einen primären Werkstückhalter 472. Die primäre Werkstückhalteeinheit 470 ist über einen primären Schwenkträger 474 und ein primäres Schwenklager 476 schwenkbar am Gestell 420 aufgenommen. Die sekundäre Werkstückhalteeinheit 480 umfasst einen sekundären Werkstückhalter 482. Die sekundäre Werkstückhalteeinheit 480 ist über einen sekundären Schwenkträger 484 und ein sekundäres Schwenklager 486 schwenkbar am Gestell 420 aufgenommen. In den Figuren 13 und 14 ist ferner ein Schwenkgehäuse 490 für die sekundäre Werkstückhalteeinheit 480 gezeigt. Das Schwenkgehäuse 490 beherbergt das sekundäre Schwenklager 486 und einen entsprechenden Schwenkantrieb.

Die sekundäre Werkstückhalteeinheit 480 ist entlang einer Linearachse 492 translatorisch verfahrbar. Die Linearachse 492 kann auch als X2-Achse bezeichnet werden. Zu diesem Zweck ist die sekundäre Werkstückhalteeinheit 480 an einem X-Schlitten 494 gelagert, der entlang einer X-Führung 496 translatorisch verfahrbar ist. Die X-Führung 496 ist an einem Flachbett 498 des Gestells 420 ausgebildet.

Im Ausführungsbeispiel gemäß den Figuren 13 und 14 weist das Gestell 420 folglich an seinem oberen Ende ein Flachbett 456 für die Y-Führung 454 und hiervon vertikal (nach unten) versetzt ein Flachbett 498 für die X-Führung 496 auf. In einer Draufsicht nutzen beide Flachbetten 456, 498 den gleichen Bauraum in der X-Richtung und der Y-Richtung. Dies sorgt insgesamt für einen geringen Platzbedarf und einen kleinen Grundriss des Gestells 420.

Die sekundäre Werkstückhalteeinheit 480 ist in einer Gestellöffnung 500 im Gestell 420 gelagert. Das Gestell 420 weist eine den Arbeitsraum zugewandte Stirnwand 502 auf. Die Stirnwand 502 weist zumindest abschnittsweise oder überwiegend eine vertikale Erstreckung auf. Der primäre Werkstückhalter 472 und der sekundäre Werkstückhalter 482 sind vor der Stirnwand 502 angeordnet. Der primäre Schwenkträger 474 und der sekundäre Schwenkträger 484 durchragen die Stirnwand 502 ausgehend vom Ständer 422 des Gestells 420.

Im Ausführungsbeispiel gemäß den Figuren 13 und 14 umfasst die Gestellöffnung 500 eine Y-Ausnehmung 506 und eine X-Ausnehmung 508. Die Y-Ausnehmung 506 kann auch als zentrale Ausnehmung bezeichnet werden. Die X-Ausnehmung 508 kann auch als seitliche Ausnehmung bezeichnet werden. Die Y-Ausnehmung 506 durchdringt das Gestell 420 vollständig in der Y-Richtung. Die X-Ausnehmung 508 durchdringt das Gestell 420 teilweise in der X-Richtung, um die Y-Ausnehmung 506 in der X-Richtung zugänglich zu machen.

Die X-Führung 496 ist im Ausführungsbeispiel an einer Unterseite der Gestellöffnung 500, insbesondere der Y-Ausnehmung 506, angeordnet. Somit ist das Schwenkgehäuse 490 innerhalb der Gestellöffnung 500 entlang der Linearachse 492 verfahrbar.

Im Ausführungsbeispiel ist die Y-Ausnehmung 506 zwischen einer ersten Wange 560 und einer zweiten Wange 562 des Gestells 420 angeordnet. Im Ausführungsbeispiel erstreckt sich ferner an der dem Y-Schlitten 452 zugewandten Oberseite des Gestells 420 eine Traverse 510 zwischen der ersten Wange 560 und der zweiten Wange 562. Auf diese Weise ist die Y-Ausnehmung 506 in der Ansichtsorientierung gemäß Fig. 14 an vier Seiten umschlossen.

Den Figuren 13 und 14 ist in Zusammenschau entnehmbar, dass sich die X-Ausnehmung 508 durch die Wange 562 in Richtung auf die Y-Ausnehmung 506 erstreckt. Auf diese Weise ergibt sich ein seitlicher Zugang zur Y-Ausnehmung 506. Die X-Ausnehmung 508 kann beispielsweise einen Antrieb 516 für die translatorische Bewegung der sekundären Werkstückhalteeinheit 480 entlang der Linearachse 492 beherbergen. Auf diese Weise kann der translatorische Freiheitsgrad der sekundären Werkstückhalteeinheit 480 günstig in das in Ständerbauweise gestaltete Gestell 420 integriert werden. Das Gestell 420 ist kompakt und gleichzeitig steif gestaltet.

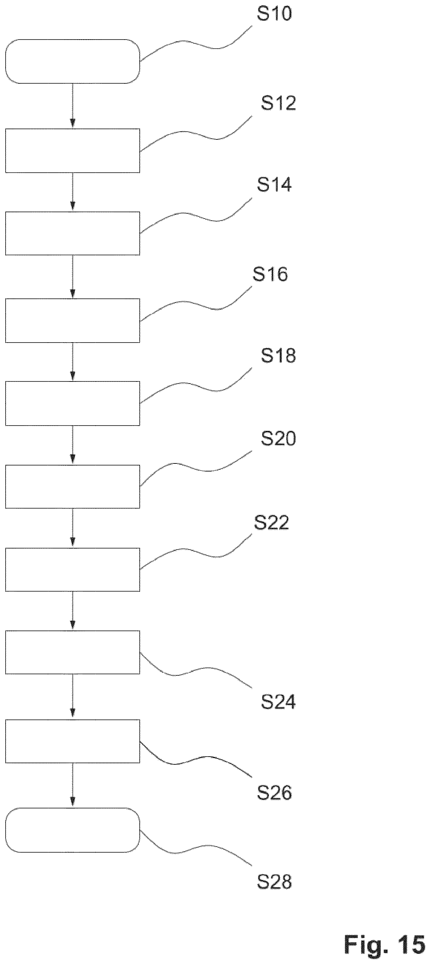

Mit Bezugnahme auf Fig. 15 wird anhand eines schematischen, stark vereinfachten Blockdiagramms eine beispielhafte Ausgestaltung eines Verfahrens zur Bearbeitung von Stangenmaterial veranschaulicht. Das Verfahren startet im Ausführungsbeispiel bei einem Schritt S10 und endet bei einem Schritt S28. Das Verfahren lässt sich mit einer Werkzeugmaschine bzw. Fertigungsanlage gemäß zumindest einer der hierin beschriebenen Ausgestaltungen durchführen.

In einem Schritt S12 wird zumindest ein Halbzeug bereitgestellt, wobei es sich insbesondere um Stangenmaterial handelt. Beispielhaft handelt es sich um sogenannte Kurzstangen, wobei unterschiedliche Querschnitte (rund, unrund, polygonale Gestaltung, Hohlprofile) vorstellbar sind. Beispielsweise weisen die Kurzstangen eine Länge von maximal 600 mm oder maximal 500 mm auf.

Es schließt sich ein Schritt S14 an, in dem die primäre Werkstückhalteeinheit in eine zur Aufnahme des Halbzeugs geeignete Orientierung verbracht wird, falls die geeignete Orientierung nicht bereits vorliegt. Dies kann eine Schwenkbewegung in Richtung auf eine horizontale Orientierung umfassen.

In einem nachfolgenden Schritt S16 wird die Werkzeugmaschine beladen, indem das Halbzeug in die primäre Werkstückhalteeinheit eingebracht wird. Dies kann das Einschieben des Halbzeugs in eine als Hohlspindel gestaltete primäre Werkstückhalteeinheit umfassen. Der Schritt S16 kann ferner die Betätigung einer in die primäre Werkstückhalteeinheit integrierten Spanneinheit durch eine externe Betätigungseinheit umfassen.

Es kann sich in einem Schritt S18 eine Bearbeitung des Halbzeugs zur Ausbildung eines Werkstücks anschließen. Die Bearbeitung kann als Drehbearbeitung und/oder Fräsbearbeitung vonstattengehen. Beispielsweise kann das Halbzeug an fünf Seiten bearbeitet werden.

In einem Schritt S20 wird das Werkstück mit der sekundären Werkstückhalteeinheit festgehalten. Dies kann zumindest zeitweise ein gemeinsames Festhalten des Halbzeugs mit dem Werkstück durch die primäre Werkstückhalteeinheit und die sekundäre Werkstückhalteeinheit umfassen. In einem solchen Zustand ist auch eine Bearbeitung des Werkstücks denkbar. Das Greifen und Halten des Werkstücks mit der sekundären Werkstückhalteeinheit erlaubt ein Lösen des Werkstücks von der primären Werkstückhalteeinheit (Trennen vom Stangenmaterial).

In einem Schritt S22 erfolgt ein Trennen des Werkstücks vom Halbzeug in einem Zustand in dem die primäre Werkstückhalteeinheit und die sekundäre Werkstückhalteeinheit das Werkstück gemeinsam halten. In einem nachfolgenden Schritt S24 kann dann das Werkstück an der zuvor nicht zugänglichen Seite bearbeitet werden, während es von der sekundären Werkstückhalteeinheit gehalten wird. Schließlich kann sich in einem Schritt S26 ein Entladen anschließt. Dies kann eine definierte Abgabe des Werkstücks von der zweiten Werkstückhalteeinheit umfassen. Beispielhaft kann dies eine Übergabe an Handhabungstechnik umfassen. Gegebenenfalls ist auch eine Schwerkraft unterstützte Abgabe denkbar, bei der das Werkstück von der sekundären Werkstückhalteeinheit fallengelassen wird.

Die primäre Werkstückhalteeinheit und die sekundäre Werkstückhalteeinheit können ferner zusammenwirken, um für ein kontrolliertes Nachschieben des Halbzeugs zu sorgen. Ein solcher Vorschub erlaubt nacheinander die Erzeugung einer Mehrzahl von Werkstücken auf Basis eines einzigen Halbzeugs in Form von Stangenmaterial. Die sekundäre Werkstückhalteeinheit ist relativ zum Gestell der Werkzeugmaschine translatorisch verfahrbar. Auf diese Weise kann die sekundäre Werkstückhalteeinheit das Halbzeug aus der primären Werkstückhalteeinheit herausziehen, wenn die Spanneinheit der primären Werkstückhalteeinheit gelöst ist, beispielsweise infolge einer Betätigung mit der externen Betätigungseinheit.

Die primäre Werkstückhalteeinheit und die sekundäre Werkstückhalteeinheit weisen jeweils eine Schwenkachse in Form einer B-Achse auf. In zumindest einer gemeinsamen horizontalen, koaxialen Orientierung können die primäre Werkstückhalteeinheit und die sekundäre Werkstückhalteeinheit gemeinsam das Halbzeug/Werkstück greifen. Da zumindest die primäre Werkstückhalteeinheit als Drehspindel gestaltet ist, ist in dieser Konfiguration eine Drehbearbeitung möglich. Ferner kann die gemeinsame koaxiale Orientierung auch für Transferzwecke genutzt werden. Die Werkzeugspindel muss nicht mit einer Schwenkachse versehen sein. Gleichwohl ist trotzdem eine Bearbeitung in fünf Achsen möglich. Unter Nutzung der Schwenkachsen der primären Werkstückhalteeinheit und der sekundären Werkstückhalteeinheit ist eine Sechs-Seiten-Bearbeitung möglich, Werkstücke können komplett bearbeitet werden.

## Patentansprüche

1. Werkzeugmaschine (12, 212, 412), die Folgendes aufweist:
- ein Gestell (20, 220, 420),
- eine am Gestell (20, 220, 420) gelagerte Werkzeugspindel (34, 234, 434), insbesondere ein einzige, permanent vertikal orientierte Werkzeugspindel (34, 234, 434), die in drei translatorischen Achsen (X, Y, Z) relativ zum Gestell (20, 220, 420) linear verfahrbar ist, umfassend eine erste horizontale Achse (40), eine zweite horizontale Achse (50) und eine vertikale Achse (60),
wobei die Werkzeugspindel (34, 234, 434) über einen Z-Schlitten (62, 462) an einem X-Schlitten (42, 442) entlang der vertikalen Achse (60) vertikal verfahrbar gelagert ist, wobei der X-Schlitten (42, 442) an einem Y-Schlitten (52, 452) entlang der ersten horizontalen Achse (40) horizontal verfahrbar gelagert ist, und wobei der Y-Schlitten (52, 452) am Gestell (20, 220, 420) entlang der zweiten horizontalen Achse (50) horizontal verfahrbar gelagert ist,
- eine am Gestell (20, 220, 420) gelagerte primäre Werkstückhalteeinheit (70, 270, 470), die als Drehspindel (68) gestaltet ist, und
- eine am Gestell (20, 220, 420) gelagerte sekundäre Werkstückhalteeinheit (80, 280, 480), die insbesondere als schwenkbare Gegenspindel, schwenkbarer Rundtisch oder als schwenkbarer Greifer gestaltet ist,
wobei die primäre Werkstückhalteeinheit (70, 270, 470) und die sekundäre Werkstückhalteeinheit (80, 280, 480) in zumindest einer horizontalen Orientierung einander zugewandt und koaxial zueinander orientiert sind, wobei die primäre Werkstückhalteeinheit (70, 270, 470) relativ zum Gestell (20, 220, 420) um eine primäre Schwenkachse (78) verschwenkbar ist, die parallel zur zweiten horizontalen Achse (50) orientiert ist, und wobei die sekundäre Werkstückhalteeinheit (80, 280, 480) relativ zum Gestell (20, 220, 420) um eine sekundäre Schwenkachse (88) verschwenkbar ist, die parallel zur zweiten horizontalen Achse (50) orientiert ist.

2. Werkzeugmaschine (12, 212, 412) nach Anspruch 1, wobei der Y-Schlitten (52, 452) ein Schrägbett (58) aufweist, an dem der X-Schlitten (42, 442) geführt ist, und/oder wobei das Gestell (20, 220, 420) ein Flachbett (56) aufweist, an dem der Y-Schlitten (52, 452) geführt ist, wobei der X-Schlitten (42, 442) vorzugsweise eine vertikale Stirnwand (66) aufweist, an der der Z-Schlitten (62, 462) geführt ist.

3. Werkzeugmaschine (12, 212, 412) nach Anspruch 1 oder 2, wobei die sekundäre Werkstückhalteeinheit (80, 280, 480) entlang einer Linearachse (92, 492) translatorisch verfahrbar ist, die parallel zur ersten horizontalen Achse (40) orientiert ist.

4. Werkzeugmaschine (12, 212) nach einem der Ansprüche 1-3, wobei das Gestell (20, 220) einen primären Gestellabschnitt (140), an dem die Werkzeugspindel (34, 234) und die primäre Werkstückhalteeinheit (70, 270) aufgenommen sind, und einen sekundären Gestellabschnitt (142) aufweist, an dem die sekundäre Werkstückhalteeinheit (80, 280) aufgenommen ist, und insbesondere wobei am Gestell (20, 220) beim sekundären Gestellabschnitt (142) eine X-Führung (96) für die sekundäre Werkstückhalteeinheit (80, 280) angeordnet ist, und/oder wobei beim primären Gestellabschnitt (140) eine Y-Führung (54) für die Werkzeugspindel (34, 234) angeordnet ist, wobei der sekundäre Gestellabschnitt (142) vorzugsweise ein Flachbett (98) bereitstellt, das die X-Führung (96) trägt.

5. Werkzeugmaschine (12, 212) nach Anspruch 4, wobei das Gestell zwischen dem primären Gestellabschnitt (140) und dem sekundären Gestellabschnitt (142) eine Aussparung (144) aufweist, die einen Freiraum für eine Schwenkbewegung zumindest der primären Werkstückhalteeinheit (70, 270) oder der sekundären Werkstückhalteeinheit (80, 280) bereitstellt.

6. Werkzeugmaschine (412) nach einem der Ansprüche 1-3, wobei die primäre Werkstückhalteeinheit (470) und die sekundäre Werkstückhalteeinheit (480) gleichgerichtet aus dem Gestell (420) herausragen, vorzugsweise in Richtung auf eine einem Bediener zugewandte Seite des Arbeitsraums (26), und insbesondere wobei die Linearachse (492) der sekundären Werkstückhalteeinheit (480) unterhalb der Y-Führung (454) für die zweite horizontale Achse (50) und vorzugsweise unterhalb der X-Führung (444) für die erste horizontale Achse (40) am Gestell (420) angeordnet ist.

7. Werkzeugmaschine (412) nach Anspruch 6, wobei das Gestell (420) als Ständer (422) gestaltet ist, der eine Stirnwand (502) aufweist, über die Schwenkträger (474, 484) der primären und der sekundären Werkstückhalteeinheit (470, 480) herausragen, und insbesondere wobei das Gestell (420) unterhalb des Y-Schlittens (452) eine Gestellöffnung (500) aufweist, in der die sekundäre Werkstückhalteeinheit (480) gelagert und entlang der Linearachse (492) translatorisch verfahrbar ist.

8. Werkzeugmaschine (412) nach Anspruch 7, wobei eine X-Führung (496) für die die sekundäre Werkstückhalteeinheit (480) in der Gestellöffnung (500) angeordnet ist, und/oder wobei oberhalb der Gestellöffnung (500) beim Gestell (420) eine Y-Führung (452) für den Y-Schlitten (552) angeordnet ist, und wobei das Gestell (420) insbesondere eine erste Wange (560) und eine zweite Wange (562), zwischen denen die Gestellöffnung (500) ausgebildet ist, und vorzugsweise eine obere Traverse (510) aufweist, die sich von der ersten Wange (560) zur zweiten Wange (562) erstreckt.

9. Werkzeugmaschine (412) nach Anspruch 7 oder 8, wobei die Gestellöffnung (500) eine Y-Ausnehmung (506), die sich parallel zur zweiten horizontalen Achse (50) erstreckt, und eine X-Ausnehmung (508) aufweist, die sich parallel zur ersten horizontalen Achse (40) erstreckt, wobei die X-Ausnehmung (508) in die Y-Ausnehmung (506) mündet, und insbesondere wobei die X-Ausnehmung (508) das Gestell (420) ausgehend von der Y-Ausnehmung (506) nach außen durchdringt, und/oder wobei die X-Ausnehmung (508) einen Antrieb (514) für die translatorische Bewegung der sekundären Werkstückhalteeinheit (84) beherbergt.

10. Werkzeugmaschine (12, 212, 412) nach einem der Ansprüche 1-9, wobei die primäre Werkstückhalteeinheit (70, 270, 470) und die sekundäre Werkstückhalteeinheit (80, 280, 480) als Gleichteile gestaltete Schwenkträger (74, 84; 474, 484) aufweisen, und wobei insbesondere der Schwenkträger (84, 484) der sekundären Werkstückhalteeinheit (80, 280, 480) schwenkbar an einem X-Schlitten (94, 494) gelagert ist, der in einer sekundären horizontalen Linearachse (92, 492) parallel zur ersten horizontalen Achse (40) relativ zum Gestell (20, 220, 420) translatorisch verfahrbar ist, und/oder der Schwenkträger (74, 474) der primären Werkstückhalteeinheit (70, 270, 470) schwenkbar an dem Gestell (20, 220, 420) gelagert ist, insbesondere in einem Schwenkgehäuse (298), das in einer Gestellöffnung (300) im Gestell (20, 220, 420) angeordnet und fest mit dem Gestell (20, 220, 420) verbunden ist.

11. Werkzeugmaschine (12, 212, 412) nach einem der Ansprüche 1-10, wobei die primäre Drehspindel (68) als schwenkbare Hohlspindel (150) gestaltet ist und eine Spanneinheit (110) zum Festhalten eines eingeführten Halbzeugs (100) aufweist, und/oder wobei die primäre Drehspindel (68) eine extern betätigbare Spanneinheit (110) zum Spannen des Halbzeugs (100) aufweist.

12. Fertigungsanlage (10, 210) mit einer Werkzeugmaschine (12, 212, 412) nach einem der Ansprüche 1-11, einem Stangenmagazin (14, 214) zur Aufnahme und Bereitstellung stangenförmiger Halbzeuge (100), und mit einem Lademechanismus (102), der dazu ausgebildet ist, zumindest in einer Horizontalstellung der primären Werkstückhalteeinheit (70, 270, 470) Halbzeuge (100) in die Drehspindel (68) einzuführen.

13. Fertigungsanlage (10, 210) nach Anspruch 12, ferner aufweisend eine mittelbar oder unmittelbar am Gestell (20, 220, 420) montierte Betätigungseinheit (112) für eine Spanneinheit (110) der Drehspindel (68) der primären Werkstückhalteeinheit (70, 270, 470), und insbesondere wobei die Betätigungseinheit (112) dazu ausgebildet ist, in einer horizontalen Orientierung der primären Werkstückhalteeinheit (70, 270, 470) auf die Spanneinheit (110) der Drehspindel (68) einzuwirken, um diese zu aktivieren oder zu deaktivieren.

14. Verfahren zur Bearbeitung von Stangenmaterial mit einer Fertigungsanlage (10, 210) nach Anspruch 12 oder 13, mit den folgenden Schritten:
- Bereitstellung zumindest eines Halbzeugs (100) durch das Stangenmagazin (14),
- Positionierung der primären Werkstückhalteeinheit (70, 270, 470) in der horizontalen Orientierung zur Aufnahme des Halbzeugs (100),
- Beladen der Drehspindel (68) der primären Werkstückhalteeinheit (70, 270, 470) mit dem Lademechanismus (102),
- Bearbeitung des Halbzeugs (100) zur Erzeugung zumindest eines Werkstücks (120), umfassend eine Drehbewegung der Drehspindel (68) sowie eine Schwenkbewegung der primären Werkstückhalteeinheit (70, 270, 470) zur Erzeugung der gewünschten Kontur,
wobei die Bearbeitung mit der Werkzeugspindel (34, 234, 434) erfolgt, die linear in drei translatorischen Achsen (X, Y, Z) relativ zum Werkstück (120) verfahrbar ist,
- Festhalten des Werkstücks (120) mit der sekundären Werkstückhalteeinheit (80, 280, 480),
- Trennen des Werkstücks (120) vom Halbzeug (100) in einem Zustand, in dem die primäre Werkstückhalteeinheit (70, 270, 470) und die sekundäre Werkstückhalteeinheit (80, 280, 480) das Werkstück (120) gemeinsam halten, und
- Bearbeitung einer zuvor nicht zugänglichen Rückseite des von der sekundären Werkstückhalteeinheit (80, 280, 480) gehaltenen Werkstücks (120).

15. Verfahren nach Anspruch 14, weitergebildet durch zumindest einen der folgenden Schritte:
- das Beladen der Drehspindel (68) der primären Werkstückhalteeinheit (70, 270, 470) mit dem Lademechanismus (102) umfasst eine Betätigung einer Spanneinheit (110) der Drehspindel (68) durch eine externe Betätigungseinheit (112), in der horizontalen Orientierung der primären Werkstückhalteeinheit (70, 270, 470),
- nach dem Trennen des Werkstücks (120) vom Halbzeug (100) wird die sekundäre Werkstückeinheit mit dem dort eingespannten Werkstück (120) entlang einer zur ersten horizontalen Achse (40) parallelen Linearachse (92, 492) translatorisch verfahren, um das Werkstück (120) für die weitere Bearbeitung einer Rückseite und eine nachfolgende Handhabung zugänglich zu machen,
- die Bearbeitung einer zuvor nicht zugänglichen Rückseite des Werkstücks (120) zur Erzeugung der gewünschten Kontur umfasst eine Schwenkbewegung der sekundären Werkstückhalteeinheit (80, 280, 480), und
- an die Bearbeitung der der zuvor nicht zugänglichen Rückseite des Werkstücks (120) schiließt sich ein Entladen an, wobei das Entladen eine Abgabe des bearbeiteten Werkstücks (120) durch die sekundäre Werkstückhalteeinheit (80, 280, 480) umfasst.
